(19) Europäisches Patentamt / European Patent Office / Office européen des brevets

(11) **EP 3 736 804 B1**

## (12) EUROPEAN PATENT SPECIFICATION

(45) Date of publication and mention
of the grant of the patent:
**23.07.2025 Bulletin 2025/30**

(21) Application number: **19173070.4**

(22) Date of filing: **07.05.2019**

(51) International Patent Classification (IPC):
**G10H 1/00** (2006.01)        **G10L 25/30** (2013.01)

(52) Cooperative Patent Classification (CPC):
**G10H 1/00;** G10H 2240/085; G10H 2240/141;
G10H 2250/225; G10H 2250/311; G10L 25/30

(54) **METHODS AND SYSTEMS FOR DETERMINING COMPACT SEMANTIC REPRESENTATIONS OF DIGITAL AUDIO SIGNALS**

VERFAHREN UND SYSTEME ZUR BESTIMMUNG VON KOMPAKTEN SEMANTISCHEN DARSTELLUNGEN VON DIGITALEN AUDIOSIGNALEN

PROCÉDÉS ET SYSTÈMES DE DÉTERMINATION DE REPRÉSENTATIONS SÉMANTIQUES COMPACTES DE SIGNAUX AUDIO NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.11.2020 Bulletin 2020/46**

(73) Proprietor: **Moodagent A/S**
**1120 Copenhagen K (DK)**

(72) Inventors:
- **Steffensen, Peter Berg**
  **1120 Copenhagen K (DK)**
- **Henderson, Mikael**
  **1120 Copenhagen K (DK)**
- **Andersen, Uffe**
  **1120 Copenhagen K (DK)**
- **Jørgensen, Thomas**
  **1120 Copenhagen K (DK)**
- **Dyrsting, Søren**
  **1120 Copenhagen K (DK)**
- **Teglbjærg, David Stubbe**
  **1120 Copenhagen K (DK)**
- **Diez Antich, Luis**
  **1120 Copenhagen K (DK)**
- **Abou-Zleikha, Mohamed**
  **London, W11 3ED (GB)**

(74) Representative: **Nordic Patent Service A/S**
**Bredgade 30**
**1260 Copenhagen K (DK)**

(56) References cited:
- **ANUSHA BALAKRISHNAN ET AL: "Reading Emotions from Speech using Deep Neural Networks", 21 December 2018 (2018-12-21), XP055640282, Retrieved from the Internet <URL:http://web.archive.org/web/20181221004322if_/http://web.stanford.edu:80/class/cs224s/reports/Anusha_Balakrishnan.pdf> [retrieved on 20191107]**
- **ZHAO JIANFENG ET AL: "Speech emotion recognition using deep 1D & 2D CNN LSTM networks", BIOMEDICAL SIGNAL PROCESSING AND CONTROL, ELSEVIER, AMSTERDAM, NL, vol. 47, 11 September 2018 (2018-09-11), pages 312 - 323, XP085502703, ISSN: 1746-8094, DOI: 10.1016/J.BSPC.2018.08.035**
- **ZHANG LINJUAN ET AL: "Convolutional Neural Network with Spectrogram and Perceptual Features for Speech Emotion Recognition", 17 November 2018, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 62 - 71, ISBN: 978-3-319-10403-4, XP047496441**
- **MINGYI CHEN ET AL: "3-D Convolutional Recurrent Neural Networks With Attention Model for Speech Emotion Recognition", IEEE SIGNAL PROCESSING LETTERS., vol. 25, no. 10, 1 October 2018 (2018-10-01), US, pages 1440 - 1444, XP055640289, ISSN: 1070-9908, DOI: 10.1109/LSP.2018.2860246**

- KEUNWOO CHOI ET AL: "A Tutorial on Deep Learning for Music Information Retrieval", ARXIV.ORG, CORNELL UNIVERSITY LIBRARY, 201 OLIN LIBRARY CORNELL UNIVERSITY ITHACA, NY 14853, 13 September 2017 (2017-09-13), XP081315681
- KATHIRESAN THAYABARAN ET AL: "Cepstral Dynamics in MFCCs using Conventional Deltas for Emotion and Speaker Recognition", CONFERENCE: THE 26TH ANNUAL CONFERENCE OF THE INTERNATIONAL ASSOCIATION FOR FORENSIC PHONETICS AND ACOUSTICS, 15 July 2017 (2017-07-15), Split, Croatia, pages 1 - 4, XP093057622, Retrieved from the Internet <URL:https://www. researchgate.net/publication/318440804_Cepstral_Dynamics_in_MFCCs_using_Conventional_Deltas_for_Emotion_and_Speaker_Recognition> [retrieved on 20230626]
- BÄCKSTRÖM TOM: "Deltas and Delta-deltas - Introduction to Speech Processing - Aalto University Wiki", SPEECHPROCESSINGBOOK.AALTO.FI, 16 April 2019 (2019-04-16), pages 1 - 2, XP093057619, Retrieved from the Internet <URL:https://wiki. aalto.fi/display/ITSP/Deltas+and+Delta-deltas> [retrieved on 20230626]

**Description**

TECHNICAL FIELD

The disclosure relates to analyzing audio data, such as music files. In particular, the embodiments described herein relate to methods and systems for determining compact semantic representations of a digital audio signals, and to using such compact representations for determining similarities between music files.

BACKGROUND

As computer technology has improved, the digital media industry has evolved greatly in recent years. Users are able to use electronic devices such as mobile communication devices (e.g., cellular telephones, smartphones, tablet computers, etc.) to consume music, video and other forms of media content. At the same time, advances in network technology have increased the speed and reliability with which information can be transmitted over computer networks. It is therefore possible for users to stream media content over computer networks as needed, or on demand, rather than receiving a complete file (on a physical CD, DVD, or downloading the entire file).

Online media streaming services exploit these possibilities by allowing users to browse large collections of media content using their electronic devices. As a result, online users today face a daunting volume of media content and choosing from this enormous volume of content can be challenging. There is therefore an increasing demand from users to be able to quickly find and be presented with the most relevant media content to consume on online media streaming services.

One way to offer relevant media content for users is using automatic media recommendation systems which rank and suggest the most interesting media content items based on user preferences, thus saving the users from manually filtering out any uninteresting or unrelated content.

The problem with this approach is that the user preferences are defined mostly based on statistical analysis of the service usage and interactions of the users and their social circles (using e.g. Collaborative Filtering), and therefore the recommendations are based each media item as a catalogue entity (e.g. a file in a database), not taking into account its internal (semantic) properties. Furthermore, when users first start to use a service they will have no information that could be extracted from their profiles regarding their interests, and even later on the gathered information can be incomplete, inaccurate, or in other ways misleading, thus resulting in recommendations that users will find useless or even annoying.

Another approach is to offer a selection of media content (e.g. in the form of a playlist) based on similarities between a larger group of media items and a seed media item selected either manually by the user or automatically by a computer-based system. The similarities between media items can be determined based on direct similarities between their content (e.g. their digital audio or video signals), or indirect similarities between their associated metadata (e.g. artist name, artist's overall musical genre).

One problem with determining direct similarities between digital audio or video signals is that it requires a massive storage capacity for storing the digital signals in the form of electronic files, and a significant amount of computing power to analyze all the files. In the case of media streaming services with continuously updated media catalogues of hundreds of millions of media items this presents huge costs and regular problems with the maintenance of hardware elements and optimization of software for the continuously growing scale of databases. In addition, due to copyright regulations or other legal restrictions, media streaming services may not have the rights to store the original digital audio or video signals on their servers.

The problem on the other hand with determining indirect similarities between associated metadata is that, although it requires much less storage capacity and computing power to analyze, the metadata is usually very limited and thus cannot represent the rich semantic and musical nuances of media items. Furthermore, this stored information is solely based on extrinsic or predefined data (such as the track title, artist name, album name, track number, and release date) and nothing on the substance of the music tracks. In some cases, the musical genre is also stored, however this genre is usually assigned manually by an industry professional for an entire album (or even entire catalogue of a certain artist) and therefore fails to truthfully represent the actual musical genre of individual music tracks.

One possible solution to this problem is to analyze the digital audio signals of music files to extract so-called low-level acoustic information representing the temporal, spectral (timbral), harmonic, or energy features of a music track. The additional information can then be used as a further basis alone or in combination with existing metadata for a more sophisticated comparison of music tracks. This solution may be able to provide improved results, but still falls short when it comes to detecting higher level emotional or musical attributes and similarities. The reason for this shortfall is that, while music is usually composed of objective properties (e.g., tempo, onsets, durations, pitches, instruments), an audio recording carries inherent information that induces emotional responses in humans, which are typically hard to quantify. Although subjective and lacking a base unit like 'seconds' for duration, or 'hertz' for pitch, these responses may nevertheless be fairly consistent across the spectrum of listeners, and therefore can be considered intrinsic song characteristics. Subjective characteristics include for instance the musical positiveness conveyed by a song, or the suitability of a song for a particular activity (e.g., dancing). Other song attributes, however, are reasonably objective but difficult to detect from the structure of the music, its score representation or its transcription. These include, for example, whether a song: was recorded live; was exclusively recorded with acoustic instruments; is exclusively instrumental; and whether the vocals are spoken words.

There can also be problems with the reliability of information extracted this way, particularly where the additional metadata requires some form of human intervention, rather than automated machine processing.

A method for predicting presence of certain emotions by analyzing speech signals is described in a paper by Anusha Balakrishnan et al: "Reading Emotions from Speech using Deep Neural Networks", which describes a system that using a convolutional neural network trained for emotion classification. In this system, a binary label is assigned to each time step that indicates presence or absence of an emotion. In a final step, certain labels are selected for each time interval in the speech signal based on majority label for that emotion cross all time steps in the respective interval. The method is however not applicable for extracting descriptor vectors from music tracks, and in particular not usable for determining high-level feature values which could represent the intensity of both emotional and musical characteristics of music tracks.

ZHAO JIANFENG ET AL: "Speech emotion recognition using deep 1D & 2D CNN LSTM networks", BIOMEDICAL SIGNAL PROCESSING AND CONTROL, ELSEVIER, AMSTERDAM, NL, vol. 47, 11 September 2018 (2018-09-11), pages 312-323, ISSN: 1746-8094, DOI: 10.1016/J.BSPC.2018.08.035 discloses an emotion detection in audio speech signals based on a succession of convolutional neural networks (CNN) or long short-term memory (LSTM) networks. A Mel-Spectrogram or audio clip is provided as low level input feature to the succession of CNN.

Accordingly, there is a need for more advanced methods and systems to automatically determine compact representations of music tracks which are small in data size but can still store sufficiently nuanced information for detecting high level emotional and musical similarities between music tracks.

The musical similarities determined accordingly can in return serve as a basis for generating high quality media recommendations for users and for sorting and categorizing media items, thus ultimately resulting in an enhanced user experience while also lowering (or keeping low) the need for storage capacity and computational power of a server or client device.

SUMMARY

It is an object to provide a method and system for determining compact representations of digital audio signals and thereby solving or at least reducing the problems mentioned above. The foregoing and other objects are achieved by the features of the independent claims. Further implementation forms are apparent from the dependent claims, the description and the figures.

According to a first aspect, there is provided a method for determining a compact semantic representation of a digital audio signal using a computer-based system, the method comprising:

> providing a digital audio signal;
> calculating, using a digital signal processor module, a low-level feature matrix from the digital audio signal, the low-level feature matrix comprising numerical values corresponding to a low-level audio feature in a temporal sequence;
> calculating, using a general extractor module, a high-level feature matrix from the low-level feature matrix, the high-level feature matrix comprising numerical values corresponding to a high-level audio feature;
> calculating, using a feature-specific extractor module, a number of high-level feature vectors from the high-level feature matrix, each high-level feature vector comprising numerical values corresponding to a high-level audio feature; calculating, using a feature-specific regressor module, a number of high-level feature values from the number of high-level feature vectors; wherein
> each high-level feature value can take a discrete numerical value between a minimum value $v_{min}$ and a maximum value $v_{max}$, wherein $v_{min}$ represents and absence and $v_{max}$ represents a maximum intensity of a musical or emotional characteristic in the digital audio signal; and
> calculating a descriptor vector by concatenating the number of high-level feature values;
> wherein $v_{min} = 1$, and $1 < v_{max} \leq 100$, more preferably $5 \leq v_{max} \leq 10$, more preferably $v_{max} = 7$.

With this method it becomes possible to determine and store complex information representing a large and continuously growing database of music tracks and, using the stored information, quickly generate relevant and high-quality playlists and recommendations of music tracks from the database following e.g. a user request. In addition, the determined compact semantic representations can help sorting and categorizing existing large catalogues of music files while also making it faster and more efficient to keep the catalogues updated by regularly adding new files. Thus, the method ultimately enables users of e.g. a music streaming service to achieve a better user experience, while also lowering (or keeping low) the need for storage capacity and computational power of the streaming service provider.

The use of descriptor vectors as the format for compact semantic representations further reduces the required data usage when communicating between a server (of a streaming service provider) and a client device (smartphone with a streaming application), thereby achieving savings on both costs, response time, and network load. The latter may become especially relevant when mobile networks are being used for data communication between a server and a client device.

In addition, calculating descriptor vectors for the digital audio signals enables an additional layer of abstraction as well as data compression, since these descriptor vectors can represent similarities or differences between digital audio signals in an abstract vector space. Calculating similarity using these small sized vectors enables efficient processing without sacrificing the accuracy or relevancy of results.

In a possible implementation form of the first aspect the low-level feature matrix is a vertical concatenation of the Mel-spectrogram of the digital audio signal and its subsequent first and second derivatives, and the low-level feature matrix preferably comprises a number of rows ranging from 1 to 1000, more preferably 1 to 200, most preferably 102 rows; and a number of columns ranging from 1 to 5000, more preferably 1 to 1000, most preferably 612 columns.

The inventors arrived at the insight that the use of the Mel-spectrogram of the digital audio signal and its subsequent first and second derivatives in this particular structure for the low-level feature matrix provides the best results for data processing and efficiency.

In the present invention, the general extractor module uses a pre-trained Convolutional Neural Network (CNN) model, wherein the architecture of the CNN model comprises an input block configured for normalizing the low-level feature matrix using a batch normalization layer; followed by four consecutive convolutional blocks; and an output layer.

The inventors arrived at the insight that the use of a CNN model with the above architecture provides the best results for efficiency of model training and prediction accuracy. In a further possible implementation form of the first aspect each of the four consecutive convolutional blocks comprises a 2-dimensional convolutional layer, a batch normalization layer, an Exponential Linear Unit, a 2-dimensional max pooling layer, and a dropout layer; and the convolutional layer of the first convolutional block comprises 64 filters, while the convolutional layers of the further consecutive blocks comprise 128 filters.

The inventors arrived at the insight that the use of a CNN block model with the above architecture provides the best results for efficiency of model training and prediction accuracy.

According to the present invention, the CNN model is pre-trained in isolation from the rest of the modules as a musical genre classifier model. In a further possible implementation form of the first aspect, the CNN is pre-trained in isolation from the rest of the modules as a musical genre classifier model by replacing the output layer with a recurrent layer and a decision layer in the architecture of the CNN model;

    providing a number $n_l$ of labeled digital audio signals, wherein each labeled digital audio signal comprises an associated ground truth musical genre;

training the CNN model by using the labeled digital audio signals as input, and iterating over a number of N epochs;
and
after the training, replacing the recurrent layer and decision layer with an output layer in the architecture of the CNN model;
wherein the number $n_l$ is $1 \leq n_l \leq 100{,}000{,}000$, more preferably $100{,}000 \leq n_l \leq 10{,}000{,}000$, more preferably $300{,}000 \leq n_l \leq 400{,}000$, most preferably $n_l = 340{,}000$; and
wherein the number of training epochs is $1 \leq N \leq 1000$, more preferably $1 \leq N \leq 100$, most preferably $N = 40$.

The inventors arrived at the insight that the above steps and parameter ranges provide the best results for efficiency of model training and prediction accuracy.

In a further possible implementation form of the first aspect the recurrent layer comprises two Gated Recurrent Unit (GRU) layers, and a dropout layer; and the decision layer comprises a fully connected layer.

The inventors arrived at the insight that the use of a recurrent layer with the above architecture provides the best results for efficiency of model training and prediction accuracy.

In a further possible implementation form of the first aspect the high-level feature matrix comprises a number of rows ranging from 1 to 1000, more preferably 1 to 100, most preferably 32 rows; and a number of columns ranging from 1 to 1000, more preferably 1 to 500, most preferably 128 columns.

The inventors arrived at the insight that the use of high-level feature matrix of the size within these particular ranges provides the best results for data processing and efficiency.

In a further possible implementation form of the first aspect the feature-specific extractor module uses an ensemble of a number $n_f$ of a pre-trained Recurrent Neural Network (RNN) models, wherein the architecture of the RNN models may differ from each other, wherein a preferred RNN model architecture comprises two Gated Recurrent Unit (GRU) layers, and a dropout layer.

The inventors arrived at the insight that the use of RNN models with the above architecture provides the best results for efficiency of model training and prediction accuracy.

In a further possible implementation form of the first aspect each of the RNN models in the ensemble is pre-trained as a regressor to predict one target value from the number $n_f$ of high-level feature values by

    providing an additional, fully connected layer of one unit in the architecture of the RNN model,
    providing a number of annotated digital audio signals, wherein each annotated digital audio signal comprises a number of annotations, the number of annotations comprising ground truth values $X_{GT}$ for high-level features of the respective annotated digital audio signal;

training each RNN model to predict one target value $X_P$ from the high-level feature values by using the annotated digital audio signals as input, and iterating until the Mean Absolute Error, MAE, between the one predicted target value $X_P$ and the corresponding ground truth value $X_{GT}$ meets a predefined threshold $T$; and

after the training, removing the fully connected layer from the architecture of the RNN model;

wherein the total number $n_a$ of annotations is $1 \leq n_a \leq$ 100,000, more preferably $50,000 \leq n_a \leq 100,000$ more preferably $70,000 \leq n_a \leq 80,000$.

The inventors arrived at the insight that the above steps and parameter ranges provide the best results for efficiency of model training and prediction accuracy.

In a further possible implementation form of the first aspect the high-level feature vector is a 1-dimensional vector comprising a number of values ranging from 1 to 1024, more preferably from 1 to 512, most preferably comprising either 33, 128 or 256 values.

The inventors arrived at the insight that the use of a high-level feature vector of the size within these particular ranges provides the best results for data processing and efficiency.

In a further possible implementation form of the first aspect the feature-specific regressor module uses an ensemble of a number $n_f$ of a pre-trained Gaussian Process Regressor (GPR) models, wherein

each GPR model is specifically configured to one target value from the number $n_f$ of high-level feature values, and wherein

each GPR model uses a rational quadratic kernel, wherein the kernel function $k$ for points $x_i, x_j$ is given by the formula:

$$k(x_i, x_j) = \sigma \left( 1 + \frac{(x_i - x_j)^2}{(2\alpha l^2)} \right)^{-\alpha}$$

$\{\sigma, \alpha, l\} \in [0.0, 0.2, 0.4, 0.6, 0.8, 1.0, 1.2, 1.4, 1.6, 1.8]$.

The inventors arrived at the insight that the use of an ensemble of pre-trained GPR models with the above parameters provide the best results for efficiency of model training and prediction accuracy.

In a further possible implementation form of the first aspect each of the GPR models in the ensemble is pre-trained as a regressor to predict one target value from the number $n_f$ of high-level feature values by

providing a number of annotated digital audio signals, wherein each annotated digital audio signal comprises a number of annotations, the number of annotations comprising ground truth values for high-level features of the respective annotated digital audio signal;

training each GPR model to predict one target value from the high-level feature values by using the annotated digital audio signals as input, and iterating until the Mean Absolute Error, MAE, between the one predicted target value and the corresponding ground truth value meets a predefined threshold;

repeating the above steps by performing a hyper-parameter grid search on the parameters $\sigma, \alpha$ and $l$ of the kernel by assigning each parameter a value from a predefined list of [0.0, 0.2, 0.4, 0.6, 0.8, 1.0, 1.2, 1.4, 1.6, 1.8], and using Mean Squared Error, MSE, as the evaluation metric, until the combination of three hyper-parameters that obtain the lowest MSE are identified; and

keeping the model with the smallest error by comparing the MAE and MSE;

wherein the total number $n_a$ of annotations is $1 \leq n_a \leq$ 100,000, more preferably $50,000 \leq n_a \leq 100,000$ more preferably $70,000 \leq n_a \leq 80,000$.

The inventors arrived at the insight that the above steps and parameter ranges provide the best results for efficiency of the training of GPR ensemble models and their prediction accuracy.

In a further possible implementation form of the first aspect the method further comprises training a descriptor profiler engine, the descriptor profiler engine comprising the digital signal processor module, the general extractor module, the feature-specific extractor module, and the feature-specific regressor module; by

providing a number $n_{aa}$ of auto-annotated digital audio signals, wherein each auto-annotated digital audio signal comprises an associated descriptor vector comprising truth values for different musical or emotional characteristics of the digital audio signal;

training the descriptor profiler engine by using the auto-annotated digital audio signals as input, and iterating the modules until the Mean Absolute Error, MAE, between calculated values of descriptor vectors and truth values of associated descriptor vectors meets a predefined threshold; and

calculating, using the trained descriptor profiler engine, descriptor vectors for un-annotated digital audio signals with no associated descriptor vectors, wherein the number $n_{aa}$ is $1 \leq n_{aa} \leq 100,000,000$, more preferably $100,000 \leq n_{aa} \leq 1,000,000$, more preferably $500,000 \leq n_{aa} \leq 600,000$.

The inventors arrived at the insight that the above steps and parameter ranges provide the best results for efficiency of the training of the descriptor profiler engine and its prediction accuracy.

According to a second aspect, there is provided a computer-based system for determining a compact semantic representation of a digital audio signal, the system comprising

a processor;

a storage device configured to store one or more digital audio signals;

a digital signal processor module configured to calculate a low-level feature matrix from the digital audio signal;

a general extractor module configured to calculate a high-level feature matrix from the low-level feature matrix;

a feature-specific extractor module configured to calculate one or more high-level feature vectors from the high-level feature matrix;

a feature-specific regressor module configured to calculate one or more high-level feature values from the one or more high-level feature vectors; and

optionally, a descriptor profiler engine comprising the digital signal processor module, the general extractor module, the feature-specific extractor module, and the feature-specific regressor module;

wherein the storage device is further configured to store instructions that, when executed by the processor, cause the computer-based system to perform a method according to any one of the possible implementation forms of the first aspect.

Implementing the method on a computer-based system as described above enables determining compact semantic representations of digital audio signals effectively, as the method can be completely automatized and e.g. each newly added digital audio signal can be processed on a remote server right after receiving in a catalogue or database. This way, any similarities between digital audio signals or music tracks can be computed in advance of receiving any user query from a client device and be stored in a database for further processing or quick retrieval. This provides a fast and dynamic user experience as well as efficient use of data.

According to a third aspect, there is provided a method for determining a compact semantic representation of a digital audio signal using a computer-based system, the method comprising:

providing a digital audio signal;

calculating, using a low-level feature extractor module, from the digital audio signal, a Mel-spectrogram, and a Mel Frequency Cepstral Coefficients (MFCC) matrix;

processing, using a low-level feature pre-processor module the Mel-spectrogram and MFCC matrix, wherein the Mel-spectrogram is subjected separately to at least a Multi Auto Regression Analysis (MARA) process and a Dynamic Histogram (DH) process, and the MFCC matrix is subjected separately to at least an Auto Regression Analysis (ARA) process and a MARA process, wherein the output of each MARA process is a first order multivariate autoregression matrix, the output of each ARA process is a third order autoregression matrix, and the output of each DH process is a dynamic histogram matrix; and calculating, using an ensemble learning module, a number $n_f$ of high-level feature values by feeding the output matrices from the low-level feature pre-processor module as a group parallelly into a number $n_f$ of ensemble learning blocks within the ensemble learning module, each ensemble learning block further comprising a number $n_{GP}$ of parallelly executed Gaussian Processes, GPs, wherein each of the GPs receives at least one of the output matrices and outputs a predicted high-level feature value, and

picking, as the output of each ensemble learning block, the best candidate from the predicted high-level feature values, using statistical data, as one of the number $n_f$ of high-level feature values, wherein each high-level feature value represents a musical or emotional characteristic of the digital audio signal; and

calculating a descriptor vector by concatenating the number $n_f$ of high-level feature values.

With this method it becomes possible to efficiently store complex information representing a large and continuously growing database of music tracks and, using the stored information, quickly generate relevant and high quality playlists of music tracks from the database following a user request. In addition, the determined compact semantic representations can help sorting and categorizing existing large catalogues of music files while also making it faster and more efficient to keep the catalogues updated by regularly adding new files. Thus, the method ultimately enables users of e.g. a music streaming service to achieve a better user experience, while also lowering (or keeping low) the need for storage capacity and computational power of the streaming service provider.

The use of descriptor vectors as the format for compact semantic representations further reduces the required data usage when communicating between a server (of a streaming service provider) and a client device (smartphone with a streaming application), thereby achieving savings on both costs, response time, and network load. The latter may become especially relevant when mobile networks are being used for data communication between the server and the client device. In addition, calculating descriptor vectors for the digital audio signals enables an additional layer of abstraction as well as data compression, since these descriptor vectors can represent similarities or differences between digital audio signals in an abstract vector space. Calculating similarity using these small sized vectors enables efficient processing without sacrificing the accuracy or relevancy of results.

In a possible implementation form of the third aspect picking the best candidate from the predicted high-level feature values comprises:

determining, using a predefined database of statistical probabilities regarding the ability of each GP to predict a certain high-level feature value, the GP within the ensemble learning block with the lowest probability to predict the respective high-level feature value, and discarding its output; and

picking the predicted high-level feature value with a numerical value in the middle from within the remaining outputs.

Predicting a plurality of high-level feature values using GPs of different statistical prediction accuracy for certain features, and then excluding values of the lowest probability and selecting a median value from the remaining set increases the prediction accuracy of the model while still keeping computational time on an efficient level. The adjustable number of used GPs makes the model flexible and easy to adapt to a required task based on available computing power, time, and the number of feature values to predict.

In a further possible implementation form of the third aspect the method further comprises training an auto-annotating engine, the auto-annotating engine comprising the low-level feature extractor module, the low-level feature pre-processor module, and the ensemble learning module;

providing a number of annotated digital audio signals, wherein each annotated digital audio signal comprises a number of annotations, the number of annotations comprising ground truth values for high-level features of the respective annotated digital audio signal;

training the auto-annotating engine by using the annotated digital audio signals as input and training the Gaussian Processes using ordinal regression; and

calculating, using the trained auto-annotating engine, descriptor vectors for un-annotated digital audio signals, the descriptor vectors comprising predicted high-level features,

wherein the total number $n_a$ of annotations is $1 \leq n_a \leq$ 100,000, more preferably $50,000 \leq n_a \leq 100,000$ more preferably $70,000 \leq n_a \leq 80,000$.

The inventors arrived at the insight that the above steps and parameter ranges provide the best results for efficiency of training the auto-annotating engine and its prediction accuracy.

According to a fourth aspect, there is provided a computer-based system for determining a compact semantic representation of a digital audio signal, the system comprising

a processor;

a storage device configured to store one or more digital audio signals;

a low-level feature extractor module configured to calculate, from the digital audio signal, a Mel-spectrogram, and a Mel Frequency Cepstral Coefficients (MFCC) matrix;

a low-level feature pre-processor module configured to process the Mel-spectrogram using a Multi Auto Regression Analysis (MARA) process and a Dynamic Histogram (DH) process, and to process the MFCC matrix using an Auto Regression Analysis (ARA) process and a MARA process;

an ensemble learning module comprising a number $n_f$ of ensemble learning blocks configured to calculate one or more high-level feature values from the output data from the processes of the low-level feature pre-processor module using a number $n_{GP}$ of parallelly executed Gaussian Processes (GPs); and

optionally, an auto-annotating engine comprising the low-level feature extractor module, the low-level feature pre-processor module, and the ensemble learning module;

wherein the storage device is further configured to store instructions that, when executed by the processor, cause the computer-based system to perform a method according to any one of the possible implementation forms of the third aspect. Implementing the method on a computer-based system as described above enables determining compact semantic representations of digital audio signals effectively as the method can be completely automatized and e.g. each newly added digital audio signal can be processed on a remote server right after receiving in a catalogue or database. This way, any similarities between digital audio signals or music tracks can be computed in advance of receiving any user query from a client device and be stored in a database for further processing or quick retrieval. This provides a fast and dynamic user experience as well as efficient use of data.

In further possible implementation forms of the first or the third aspect each high-level feature value represents one of either a perceived musical characteristic corresponding to the musical style, musical genre, musical sub-genre, rhythm, tempo, vocals, or instrumentation of the respective digital audio signal; or a perceived emotional characteristic corresponding to the mood of the respective digital audio signal.

Providing such feature values that numerically represent these musical and emotional characteristics enables a complex representation of digital audio signal while still having an efficiently small data size.

In a further possible implementation form of the third aspect each high-level feature value can take a discrete numerical value between a minimum value $v_{min}$ and a maximum value $v_{max}$, wherein $v_{min}$ represents and absence and $v_{max}$ represents a maximum intensity of the musical or emotional characteristic in the digital audio signal, and

wherein $v_{min} = 1$, and $1 < v_{max} \leq 100$, more preferably $5 \leq v_{max} \leq 10$, more preferably $v_{max} = 7$.

The inventors arrived at the insight that selecting numerical values from within these ranges ensures that the data used for further processing is sufficiently detailed while also compact in data size in order to allow for efficient processing.

In a further possible implementation form of the first or the third aspect the duration $L_s$ of the digital audio signal is $1s < L_s < 60s$, more preferably $5s < L_s < 30s$, more preferably $L_s = 15s$.

The inventors arrived at the insight that input digital audio signal duration is most optimal when it ranges from 1s to 60s, more preferably from 5s to 30s, and more preferably, when the predefined segment duration is 15s. Selecting a signal duration from within these ranges, preferably taking into account the total duration of a music track that the audio signal is extracted from, ensures that the data file is compact in size in order to save computer storage and computational power, while in the same time contains sufficient amount of audio information for further analysis.

In a further possible implementation form of the first or the third aspect the number $n_f$ is $1 \leq n_f \leq 256$, more preferably $10 \leq n_f \leq 50$, more preferably $n_f = 34$.

The inventors arrived at the insight that these particular ranges provide the best results for data processing and efficiency.

In a further possible implementation form of the third aspect the number $n_{GP}$ is $1 < n_{GP} \leq 10$, more preferably $1 < n_{GP} \leq 5$, more preferably $n_{GP} = 4$.

The inventors arrived at the insight that the use of a number of GPs within the above ranges provides the best results for efficiency of model training and prediction accuracy.

In a further possible implementation form of the first aspect providing the number $n_{aa}$ of auto-annotated digital audio signals comprises calculating the associated descriptor vector using a method according to any one of the possible implementation forms of the third aspect.

The inventors arrived at the insight that connecting the descriptor profiler engine and the auto-annotating engine by calculating the associated descriptor vectors by the auto-annotating engine to be used as input by the descriptor profiler engine provides further increased prediction accuracy for the integrated model. In addition, connecting the two models enables scaling the method and calculating descriptor vectors for larger numbers of input digital audio signals with a relatively small amount of available ground truth data for the high-level feature values.

In a further possible implementation form of the second aspect the system further comprises

a low-level feature extractor module configured to calculate, from the digital audio signal, a Mel-spectrogram, and a Mel Frequency Cepstral Coefficients (MFCC) matrix;

a low-level feature pre-processor module configured to process the Mel-spectrogram using a Multi Auto Regression Analysis (MARA) process and a Dynamic Histogram (DH) process, and to process the MFCC matrix using an Auto Regression Analysis (ARA) process and a MARA process;

an ensemble learning module comprising a number $n_f$ of ensemble learning blocks configured to calculate one or more high-level feature values from the output data from the processes of the low-level feature pre-processor module using a number $n_{GP}$ of parallelly executed Gaussian Processes (GPs); and

optionally, an auto-annotating engine comprising the low-level feature extractor module, the low-level feature pre-processor module, and the ensemble learning module;

wherein the storage device is further configured to store instructions that, when executed by the processor, cause the computer-based system to perform a method according to any one of the possible implementation forms of the third aspect. Integrating the descriptor profiler engine and the auto-annotating engine on a computer-based system as described above and calculating the associated descriptor vectors by the auto-annotating engine to be used as input by the descriptor profiler engine provides further increased prediction accuracy for the integrated model. In addition, connecting the two models enables scaling the method and calculating descriptor vectors for larger numbers of input digital audio signals with a relatively small amount of available ground truth data for the high-level feature values.

In a further possible implementation form of the first or the third aspect the method further comprises:

storing the descriptor vector in a database alone, or in an arbitrary or temporally ordered combination with further one or more descriptor vectors, as a compact semantic representation of a music file, wherein each of the descriptor vectors are calculated from different audio signals extracted from the same music file. With this method it becomes possible to efficiently store complex information representing music tracks and, using the stored information, quickly generate relevant and high quality playlists of music tracks from a continuously growing database following a user request. In addition, the determined compact semantic representations can help sorting and categorizing existing large catalogues of music files while also making it faster and more efficient to keep the catalogues updated by regularly adding new files. Thus, the method ultimately enables users of e.g. a music streaming service to achieve a better user experience, while also lowering (or keeping low) the need for storage capacity and computational power of the streaming service provider.

In a further possible implementation form of the first or the third aspect the method further comprises:

determining similarities between two or more music files based on their respective compact semantic representations.
Calculating similarity using these small sized compact semantic representations enables efficient processing without sacrificing the accuracy or relevancy of results.

These and other aspects will be apparent from and the embodiment(s) described below.

BRIEF DESCRIPTION OF THE DRAWINGS

In the following detailed portion of the present disclosure, the aspects, embodiments and implementations will be explained in more detail with reference to the example embodiments shown in the drawings, in which:

Fig. 1 shows a flow diagram illustrating the steps of a method for determining a compact semantic representation of a digital audio signal in accordance with the first aspect;

Fig. 2 illustrates the architecture of a CNN model of the general extractor module in accordance with a possible implementation form of the first aspect;

Fig. 3 shows a flow diagram illustrating the pre-training method of a CNN model in accordance with a possible implementation form of the first aspect;

Fig. 4 illustrates the architecture of a pre-trained RNN model of the feature-specific extractor module in accordance with a possible implementation form of the first aspect;

Fig. 5 shows a flow diagram illustrating the pre-training method of an RNN model in accordance with a possible implementation form of the first aspect;

Fig. 6 illustrates the ensemble of pre-trained GPR models of the feature-specific regressor module in accordance with a possible implementation form of the first aspect;

Fig. 7 shows the rational quadratic kernel function formula used by each GPR model in accordance with a possible implementation form of the first aspect;

Fig. 8 shows a flow diagram illustrating the pre-training method of a GPR model within an ensemble of GPR models of the feature-specific regressor module in accordance with a possible implementation form of the first aspect;

Fig. 9 shows a flow diagram illustrating the training method of a descriptor profiler engine in accordance with a further possible implementation form of the first aspect;

Fig. 10 shows a flow diagram illustrating the steps of a method for determining a compact semantic representation of a digital audio signal in accordance with the third aspect;

Fig. 11 illustrates the method of picking a best candidate from predicted high-level feature values in an ensemble learning block in accordance with a possible implementation form of the third aspect;

Fig. 12 shows a flow diagram illustrating the training method of an auto-annotating engine in accordance with a possible implementation form of the third aspect;

Fig. 13 shows a flow diagram illustrating the training of a descriptor profiler engine according to a possible implementation form of the first aspect using auto-annotated digital audio signals with associated descriptor vectors calculated in accordance with a possible implementation form of the third aspect;

Fig. 14 shows a block diagram of a computer-based system in accordance with possible implementation forms of the second and fourth aspects; and

Fig. 15 illustrates using descriptor vectors as compact semantic representations for determining similarities between two music files in accordance with a possible implementation form of either the first or the third aspect.

DETAILED DESCRIPTION

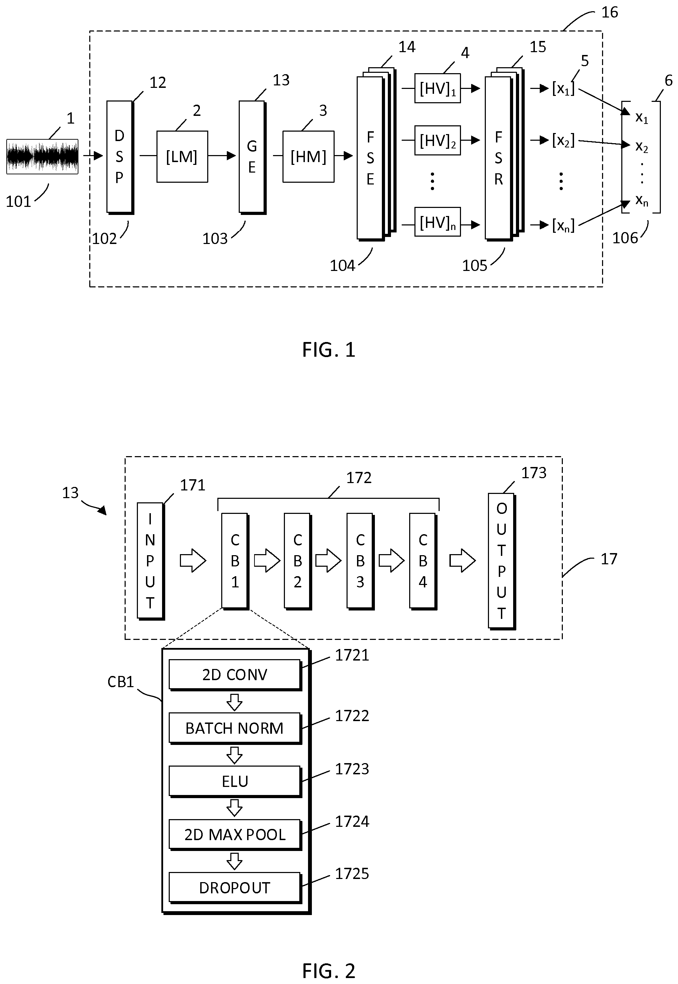

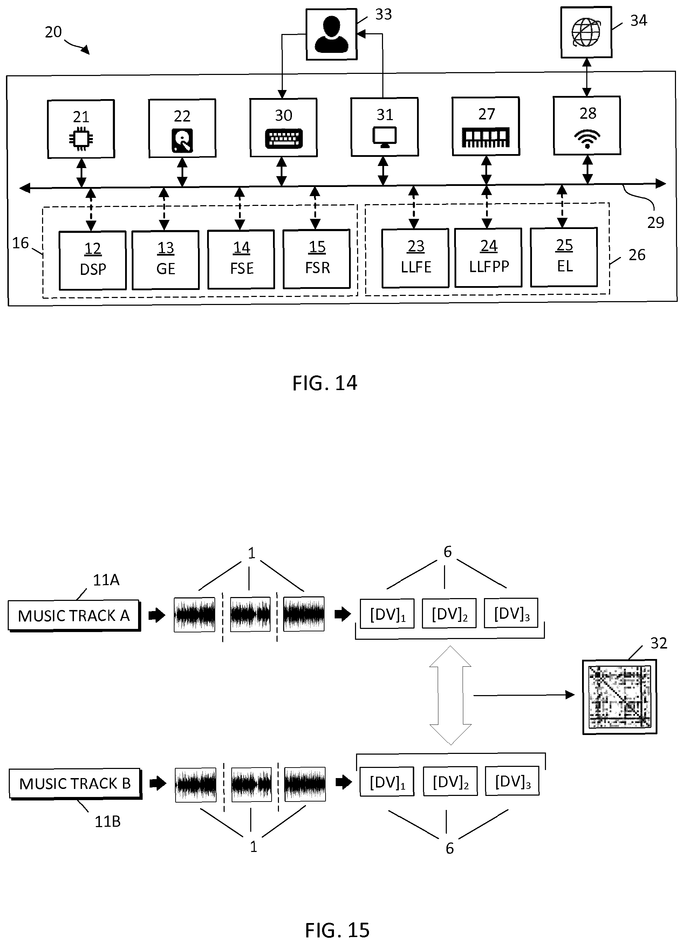

Fig. 1 shows a flow diagram of determining a compact semantic representation of a digital audio signal in accordance with the present disclosure, using a computer-based system such as for example the system shown on Fig. 14.

In the context of the present disclosure 'semantic' refers to the broader meaning of the term used in relation to data models in software engineering describing the meaning of instances. A semantic data model in this interpretation is an abstraction that defines how stored symbols (the instance data) relate to the real world, and includes the capability to express information that enables parties to the information exchange to interpret meaning (semantics) from the instances, without the need to know the meta-model itself.

Thus, the term 'compact semantic representation' refers to efficiently sized digital information (data in a database) that expresses relations to high-level concepts (meaning) in the real world (e.g. musical and emotional characteristics) and provides means to compare associated objects (digital audio signals or music tracks) without the need to know what high-level concept each piece of data exactly represents.

In an initial step 101, a a digital audio signal 1 is provided. In this context, 'digital audio signal' refers to any sound (e.g. music or speech) that has been recorded as or converted into digital form, where the sound wave (a continuous signal) is encoded as numerical samples in continuous sequence (a discrete-time signal). The average number of samples encoded in one second is called the sampling frequency (or sampling rate).

In a preferred embodiment, the provided audio signal 1 is sampled at 22050 Hz and converted to mono by averaging the two channels of a stereo signal. However, it should be understood that any suitable sampling rate and channel conversion can be used for providing the digital audio signal 1. The digital audio signal 1 can be provided in the form of an e.g. audio file on a storage medium 22 of computer-based system 20.

In an embodiment, the duration $L_s$ of the digital audio signal 1 ranges from 1s to 60s, more preferably from 5s to 30s. In a preferred embodiment, the duration $L_s$ of the digital audio signal is 15s.

In an embodiment, the digital audio signal 1 is a representative segment extracted from a music track 11.

In a next step 102, a low-level feature matrix 2 is calculated from the digital audio signal 1 using a digital signal processor module 12. The numerical values of the low-level feature matrix 2 correspond to values of certain low-level audio features, arranged in a temporal sequence according to the temporal information from the digital audio signal 1. The object of this digital signal processing step 102 is to transform the input audio signal 1 into a new space of variables that simplifies further analysis and processing.

A 'matrix' in this context is meant to be interpreted in a broad sense, simply defining an entity comprising a plurality of values in a specific arrangement of rows and columns.

The term 'low-level audio feature' in this context refers to numerical values describing the contents of an audio signal on a signal level (as opposed to high-level features referring to an abstracted, symbolic level) and are determined according to different kinds of inspections such as temporal, spectral, etc. In particular, the temporal sequence of low-level audio features in this context may refer to a Mel-spectrogram, a Mel Frequency Cepstrum Coefficient (MFCC) vector, a Constant-Q transform, a Variable-Q transform, or a Short Time Fourier Transform (STFT). Further examples may include, but are not limited to, those of fast Fourier transforms (FFTs), digital Fourier transforms (DFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients.

In an embodiment the low-level feature matrix 2 is a vertical concatenation of the Mel-spectrogram of the digital audio signal 1 and its subsequent first and second derivatives.

In a possible embodiment, the Mel-spectrogram is computed by extracting a number of Mel frequency bands from a Short-Time Fourier Transform of the digital audio signal 1 using a Hanning window of 1024 samples with 512 samples of overlap (50% of overlap). In possible embodiments the number of Mel bands ranges from 10 to 50, more preferably from 20 to 40, more preferably the number of used Mel bands is 34. In a possible embodiment, the formulation of the Mel-filters uses the HTK formula. In a possible embodiment, each of the bands of the Mel-spectrogram is divided by the number of filters in the band. Finally, the result is squared to the power of two and transformed to the Decibel scale.

In possible embodiments the low-level feature matrix 2 comprises a number of rows ranging from 1 to 1000, more preferably 1 to 200, most preferably 102 rows; and a number of columns ranging from 1 to 5000, more preferably 1 to 1000, most preferably 612 columns.

In a next step 103, a high-level feature matrix 3 is calculated from the low-level feature matrix 2 using a general extractor module 13. The numerical values of the high-level feature matrix 3 each correspond to a high-level audio feature. This component maps the input data from the low-level matrix space into a latent-space. The dimensions of the latent-space are lower, which is useful for classification or regression tasks, such as identifying the mood or the genre of a digital audio signal 1.

A 'matrix' in this context is meant to be interpreted in a broad sense, simply defining an entity comprising a plurality of values in a specific arrangement of rows and columns.

As explained above the term 'low-level audio feature' in the present disclosure refers to numerical values describing the contents of an audio signal on a signal level and are determined according to different kinds of inspections (such as temporal, spectral, etc.). The term 'high-level audio feature' in contrast refers to numerical values on an abstracted, symbolic level determined based on numerical values of low-level audio features.

In possible embodiments the high-level feature matrix 3 comprises a number of rows ranging from 1 to 1000, more preferably 1 to 100, most preferably 32 rows; and a number of columns ranging from 1 to 1000, more preferably 1 to 500, most preferably 128 columns.

In a next step 104, a number $n_f$ of high-level feature vectors 4 are calculated from the high-level feature matrix 3 using a feature-specific extractor module 14. The numerical values in the high-level feature vectors 4 each correspond to a high-level audio feature.

A 'vector' in this context is meant to be interpreted in a broad sense, simply defining an entity comprising a plurality of values in a specific order or arrangement.

In an embodiment the number of high-level feature vectors 4 is between $1 \leq n_f \leq 256$, more preferably between $10 \leq n_f \leq 50$. In a preferred embodiment the number of high-level feature vectors 4 is $n_f = 34$.

In further possible embodiments, the high-level feature vector 4 is a 1-dimensional vector comprising a number of values ranging from 1 to 1024, more preferably from 1 to 512. In most preferred embodiments the high-level feature vector 4 is a 1-dimensional vector comprising either 33, 128 or 256 values.

In a next step 105, a number $n_f$ of high-level feature values 5 are calculated from the number $n_f$ of high-level feature vectors 4 using a feature-specific regressor module 15, wherein each high-level feature value 5 represents a musical or emotional characteristic of the digital audio signal 1.

According to the possible embodiments mentioned above, in some embodiments the number $n_f$ of high-level feature values 5 ranges between $1 \leq n_f \leq 256$, more preferably between $10 \leq n_f \leq 50$. In a preferred embodiment the number of high-level feature values 5 is $n_f = 34$.

In possible embodiments a high-level feature value 5 may represent a perceived musical characteristic corresponding to the musical style, musical genre, musical sub-genre, rhythm, tempo, vocals, or instrumentation of the respective digital audio signal 1; or a perceived emotional characteristic corresponding to the mood of the respective digital audio signal 1.

In a possible embodiment, the high-level feature values 5 correspond to a number of moods (such as 'Angry', 'Joy', or 'Sad'), a number of musical genres (such as 'Jazz', 'Folk', or 'Pop'), and a number of stylistic features (such as 'Beat Type', 'Sound Texture', or 'Prominent Instrument').

In a possible embodiment each high-level feature value 5 can take a discrete numerical value between a minimum value $v_{min}$ and a maximum value $v_{max}$, wherein $v_{min}$ represents and absence and $v_{max}$ represents a maximum intensity of the musical or emotional characteristic in the digital audio signal 1.

In possible embodiments the minimum discrete numerical value is $v_{min} = 1$, and the maximum discrete numerical value can range between $1 < v_{max} \leq 100$, more preferably $5 \leq v_{max} \leq 10$, more preferably the maximum discrete numerical value is $v_{max} = 7$.

In a next step 106, a descriptor vector 6 is calculated by concatenating the number $n_f$ of high-level feature values 5.

Similarly as above, a 'descriptor vector' in this context is meant to be interpreted in a broad sense, simply defining an entity comprising a plurality of values in a specific order or arrangement that represent the digital audio signal 1.

Fig. 2 illustrates in more detail a possible embodiment of the general extractor module 13 in accordance with the present disclosure. In this implementation, steps and features that are the same or similar to corresponding steps and features previously described or shown herein are denoted by the same reference numeral as previously used for simplicity.

In this embodiment, the general extractor module 13 is a pre-trained Convolutional Neural Network (CNN) 17, wherein the architecture of the CNN 17 comprises:

> an input block 171 configured for normalizing the low-level feature matrix 2 using a batch normalization layer; followed by
> four consecutive convolutional blocks 172; and an output layer 173.

In an embodiment each of the four consecutive convolutional blocks 172 comprises

> a 2-dimensional convolutional layer 1721,
> a batch normalization layer 1722,
> an Exponential Linear Unit (ELU) 1723 as the activation function,
> a 2-dimensional max pooling layer 1724, and
> a dropout layer 1725.

In a possible embodiment, the convolutional layer 1721 of the first convolutional block comprises 64 filters, while the convolutional layers 1721 of the further consecutive blocks comprise 128 filters. In possible embodiments, the size of each filter is between $2 \times 2$ and $10 \times 10$, preferably $3 \times 3$. In further possible embodiments, the dropout layers have a rate for removing units between 0.1 and 0.5, more preferably a rate of 0.1.

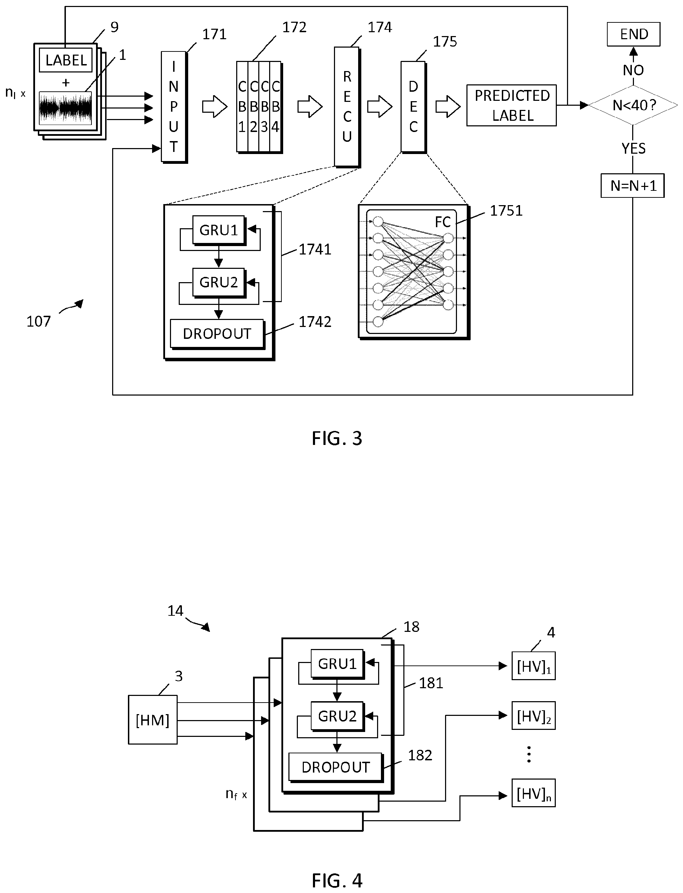

Fig. 3 shows a flow diagram illustrating a possible embodiment of the method and system in accordance with the present invention, wherein the CNN model 17 is pre-trained 107 in isolation from the rest of the modules as a musical genre classifier model according to conventional methods of Transfer Learning. In this implementation, steps and features that are the same or similar to corresponding steps and features previously described or shown herein are denoted by the same reference numeral as previously used for simplicity. In an initial step the output layer 173 is replaced with a recurrent layer 174 and a decision layer 175 in the architecture of the CNN model 17.

In a possible embodiment the recurrent layer 174 comprises two Gated Recurrent Units (GRU) layers 1741, and a dropout layer 1742.

In a further possible embodiment, the decision layer 175 comprises a fully connected layer 1751.

In a next step a number $n_l$ of labeled digital audio signals 9 are provided, each labeled digital audio signal 9 comprising an associated ground truth musical genre, or simply 'label' (indicated on the figure as 'LABEL').

In a next step the CNN model 17 is trained by using the labeled digital audio signals 9 as input and iterating over a number of N epochs.

In the final step, after the training, the recurrent layer 174 and decision layer 175 are replaced back with an output layer 173 in the architecture of the CNN model 17.

In possible embodiments the number $n_l$ of labeled digital audio signals 9 is between $1 \leq n_l \leq 100,000,000$, more preferably between $100,000 \leq n_l \leq 10,000,000$, more preferably between $300,000 \leq n_l \leq 400,000$. In a most preferred embodiment, the number of labeled digital audio signals 9 is $n_l = 340,000$.

In further possible embodiments the number of training epochs is between $1 \leq N \leq 1000$, more preferably between $1 \leq N \leq 100$. In a most preferred embodiment, the number of training epochs is N = 40.

Fig. 4 illustrates the architecture of the feature-specific extractor module 14 in accordance with the present disclosure wherein the feature-specific extractor module 14 uses an ensemble of a number $n_f$ of pre-trained Recurrent Neural Network (RNN) models 18. In this implementation, steps and features that are the same or similar to corresponding steps and features previously described or shown herein are denoted by the same reference numeral as previously used for simplicity.

In the same way as the general extractor module 13, the feature-specific extractor module 14 maps the input data (the high-level feature matrix 3) to a latent-space, but in this case, the latent-space is specific for one of the values of the descriptor vector 6. There are a number $n_f$ of pre-trained RNN models 18, one for each value of the descriptor vector 6, which is the reason for naming this component as an ensemble. Each model in the ensemble is based on Recurrent Neural Networks, and while the input for all of the models 18 is the high-level feature matrix 3, the subsequent architecture of the RNN models 18 may differ from each other.

In a preferred embodiment, the RNN model 18 architecture comprises two GRU layers 181, and a dropout layer 182. In a possible embodiment, the GRU layers 181 comprise a number of units between 1 and 100, most preferably 33 units. In further possible embodiments, the dropout layer 182 has a rate for removing units between 0.1 and 0.9, more preferably a rate of 0.5.

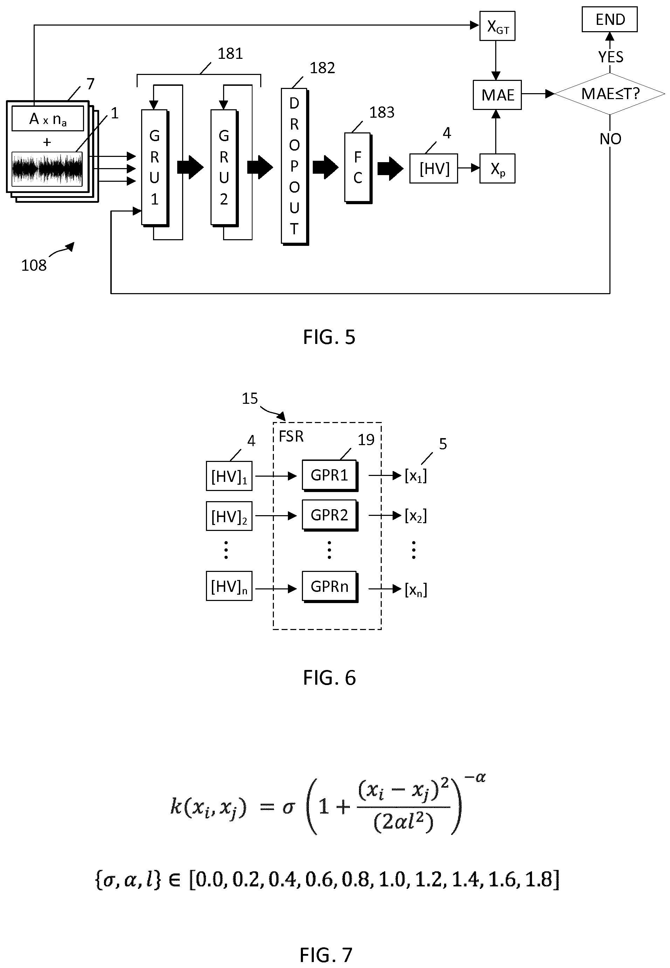

Fig. 5 shows a possible embodiment of the method and system in accordance with the present disclosure wherein each RNN model 18 in the ensemble of pre-trained Recurrent Neural Network (RNN) models 18 is pre-trained 108 as a regressor to predict one target value from the number $n_f$ of high-level feature values 5. In this implementation, steps and features that are the same or similar to corresponding steps and features previously described or shown herein are denoted by the same reference numeral as previously used for simplicity. In an initial step, an additional, fully connected layer 183 of one unit in the architecture of the RNN model 18 is provided.

In a next step, a number of annotated digital audio signals 7 is provided, wherein each annotated digital audio signal 7 comprises a number of annotations A, the number of annotations comprising ground truth values $X_{GT}$ for high-level features of the respective annotated digital audio signal 7. The annotations may further comprise a starting point in seconds referring to the original digital audio signal 1 or a music track 11 that the digital audio signal 1 was extracted from. In a next step, each RNN model 18 is trained to predict one target value $X_P$ from the high-level feature values 5 by using the annotated digital audio signals 7 as input, and iterating until the Mean Absolute Error (MAE) between the one predicted target value $X_P$ and the corresponding ground truth value $X_{GT}$ meets a predefined threshold T.

In the final step, after the training, the fully connected layer 183 is removed from the architecture of the RNN model 18.

In possible embodiments, the total number $n_a$ of annotations is between $1 \leq n_a \leq 100,000$, more preferably between $50,000 \leq n_a \leq 100,000$ most preferably between $70,000 \leq n_a \leq 80,000$.

Fig. 6 illustrates a possible embodiment of the method and system in accordance with the present disclosure wherein the feature-specific regressor module 15 uses an ensemble of a number $n_f$ of a pre-trained Gaussian Process Regressor (GPR) models 19. In this implementation, steps and features that are the same or similar to corresponding steps and features previously described or shown herein are denoted by the same reference numeral as previously used for simplicity.

Each GPR model 19 in the ensemble is specifically configured to predict one target value from the number $n_f$ of high-level feature values 5.

In an embodiment, each GPR model 19 uses a rational quadratic kernel, wherein the kernel function $k$ for points $x_i, x_j$ is given by the formula (also shown in Fig. 7):

$$(1). \qquad kx_i, x_j = \sigma \left( 1 + \frac{x_i - x_j{}^2}{2\alpha l^2} \right)^{-\alpha}$$

wherein
$\{\sigma, \alpha, l\} \in [0.0, 0.2, 0.4, 0.6, 0.8, 1.0, 1.2, 1.4, 1.6, 1.8]$

In an embodiment, the implementation for the GPR uses the python module 'scikit-learn'.

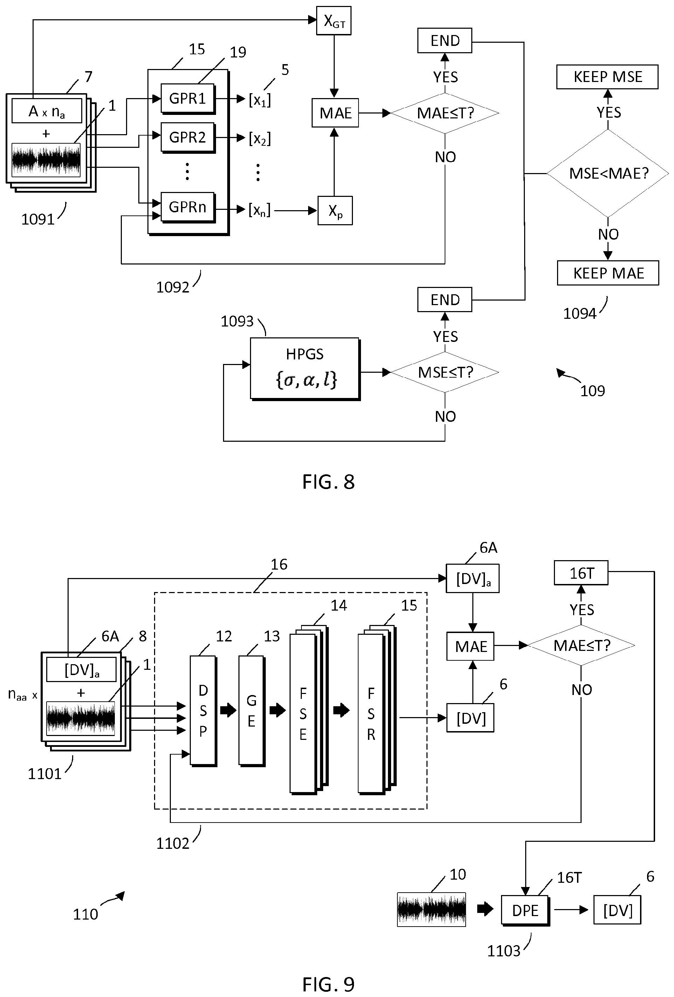

Fig. 8 shows a possible embodiment of the method and system in accordance with the present disclosure wherein each GPR model 19 in the ensemble of GPR models is pre-trained 109 as a regressor to predict one target value from the number $n_f$ of high-level feature values 5. In this implementation, steps and features that are the same or similar to corresponding steps and features previously described or shown herein are denoted by the same reference numeral as previously used for simplicity.

In an initial step 1091, a number of annotated digital audio signals 7 are provided, wherein each annotated digital audio signal 7 comprises a number of annotations, the number of annotations comprising ground truth values for high-level features of the respective annotated digital audio signal 7. In a next step 1092, each GPR model 19 is trained 19 to predict one target value from the high-level feature values 5 by using the annotated digital audio signals 7 as input, and iterating until the Mean Absolute Error (MAE) between the one predicted target value and the corresponding ground truth value meets a predefined threshold.

In a next step 1093, the above steps are repeated by performing a hyperparameter grid search on the parameters $\sigma$, $\alpha$ and $l$ of the kernel by assigning each parameter a value from a predefined list of values: [0.0, 0.2, 0.4, 0.6, 0.8, 1.0, 1.2, 1.4, 1.6, 1.8].

Parameters which define a model architecture are referred to as 'hyperparameters' and thus this process of searching for the ideal model architecture is referred to as 'hyperparameter grid search'. A grid search will go through a manually specified subset of the values for each hyperparameter with the goal to determine what are the values for these hyperparameters that provide the best model.

In the case of a GPR model 19, the hyperparameters are sigma, alpha, and 1, and the hyperparameter search comprises assigning to each of the hyperparameters one of the values in the list [0.0, 0.2, 0.4, 0.6, 0.8, 1.0, 1.2, 1.4, 1.6, 1.8], train the GPR model 19 and evaluate.

An example of few iterations of the search is the following:

[Iteration 1]

step 1 - assign values to each hyperparameter:
sigma = 0.0, alpha = 0.0, l = 0.0
step 2 - train GPR model
step 3 - evaluate model

[Iteration 2]

step 1 - assign values to each hyperparameter:
sigma = 0.2, alpha = 0.0, l = 0.0
step 2 - train GPR model
step 3 - evaluate model

[Iteration 3]

step 1 - assign values to each hyperparameter:
sigma = 0.4, alpha = 0.0, l = 0.0
step 2 - train GPR model
step 3 - evaluate model

[...]
[Iteration 1000]

step 1 - assign values to each hyperparameter:
sigma = 1.8, alpha = 1.8, l = 1.8
step 2 - train GPR model
step 3 - evaluate model

For this step the evaluation metric used is the Mean Squared Error. Each set of values for the hyperparameters will give us a different MSE. The outcome of the hyperparameter grid search is finding the values for the combination of three hyperparameters that obtain the lower MSE, and the training is carried out until this combination is identified.

In a next step 1094, the obtained smallest MAE and MSE values from the above steps are compared, and the model with the smallest error is identified and used as the pre-trained GPR model.

In possible embodiments, the total number $n_a$ of annotations is between $1 \leq n_a \leq 100,000$, more preferably between $50,000 \leq n_a \leq 100,000$ most preferably between $70,000 \leq n_a \leq 80,000$.

Fig. 9 shows a flow diagram illustrating the training method of a descriptor profiler engine 16 in accordance with the present disclosure. In this implementation, steps and features that are the same or similar to corresponding steps and features previously described or shown herein are denoted by the same reference numeral as previously used for simplicity.

The descriptor profiler engine 16 comprises a digital signal processor module 12, a general extractor module 13, a feature-specific extractor module 14, and a feature-specific regressor module 15 according to any of the possible embodiments described above.

In an initial step 1101, a number $n_{aa}$ of auto-annotated digital audio signals 8 are provided, wherein each auto-annotated digital audio signal 8 comprises an associated descriptor vector 6A comprising truth values for different musical or emotional characteristics of the digital audio signal 1.

In a next step 1102, the descriptor profiler engine 16 is trained by using the auto-annotated digital audio signals 8 as input and iterating the parameters of the modules 12 to 15 until the MAE between calculated values of descriptor vectors 6 and truth values of associated descriptor vectors 6A meets a predefined threshold. This training step 1102 results in a trained descriptor profiler engine 16T.

In a possible embodiment, the trained descriptor profiler engine 16T is validated in a further step, using the set of annotated digital audio signals 7 as described above, wherein each annotated digital audio signal 7 comprises a number of annotations, the number of annotations comprising ground truth values for high-level features of the respective annotated digital audio signal 7, and wherein the total number $n_a$ of annotations is between $1 \leq n_a \leq 100,000$, more preferably between

$50,000 \leq n_a \leq 100,000$ most preferably between $70,000 \leq n_a \leq 80,000$.

In a final step 1103, descriptor vectors 6 are calculated, using the trained descriptor profiler engine 16T, for un-annotated digital audio signals 10 which have no descriptor vectors 6A associated therewith.

In possible embodiments, the number $n_{aa}$ of auto-annotated digital audio signals 8 is between $1 \leq n_{aa} \leq 100,000,000$, more preferably $100,000 \leq n_{aa} \leq 1,000,000$. In most preferred embodiments, the number $n_{aa}$ of auto-annotated digital audio signals 8 is between $500,000 \leq n_{aa} \leq 600,000$.

In a possible embodiment, the training of the descriptor profiler engine 16 is an iterative optimization process, wherein in each iteration, the general extractor module 13 and the feature-specific extractor module 14 are trained with the auto-annotated digital audio signals 8, and the feature-specific regressor module 15 is trained, as described above, using the annotated digital audio signals 7. In a final step, the descriptor profiler engine 16 updates the annotations of the auto-annotated data set. This process is repeated until there is no improvement on the evaluation. Thus, in the first iteration, the auto-annotations come from the number $n_{aa}$ of auto-annotated digital audio signals 8, but in the following iterations, it is the descriptor profiler engine 16 that creates them.

In an embodiment, the trained descriptor profiler engine 16T is evaluated by computing the MAE between manual annotations and the predictions (high-level feature values 5 of calculated descriptor vectors 6) of the trained descriptor profiler engine 16T. A small MAE suggests the model is correct in predicting, while a large MAE suggests that the predictions are not accurate.

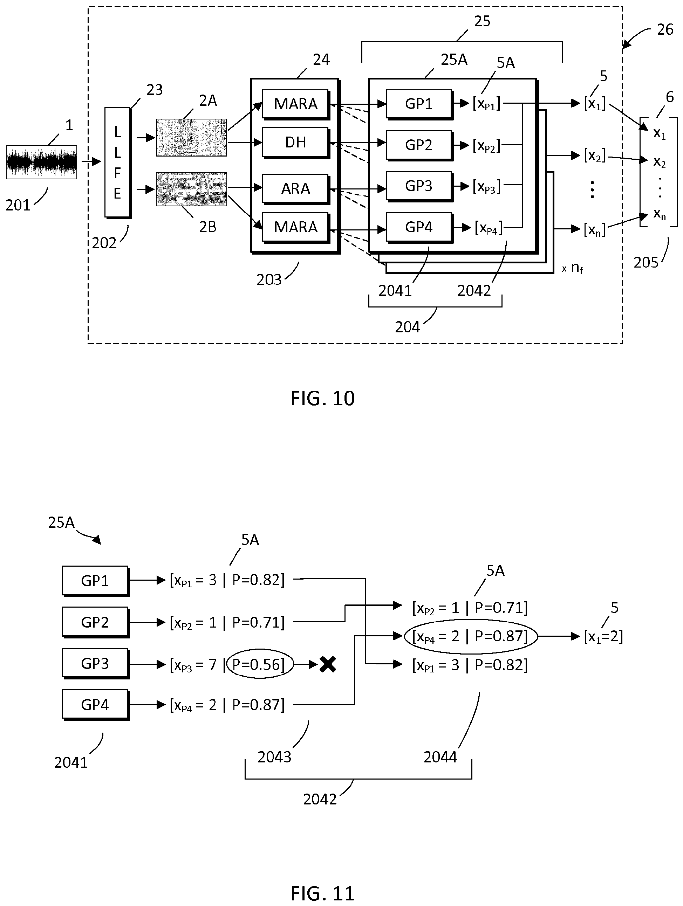

Fig. 10 shows a flow diagram illustrating a further possible method and system for determining a compact semantic representation of a digital audio signal 1 in accordance with the present disclosure. In this implementation, steps and features that are the same or similar to corresponding steps and features previously described or shown herein are denoted by the same reference numeral as previously used for simplicity.

In an initial step 201, a digital audio signal 1 is provided. Similarly as above, the duration $L_s$ of the digital audio signal 1 may range from 1s to 60s, more preferably from 5s to 30s. In a preferred embodiment, the duration $L_s$ of the digital audio signal is 15s.

In an embodiment, the digital audio signal 1 is a representative segment extracted from a music track 11, wherein 'music track' refers to any piece of music, either a song or an instrumental music piece, created (composed) by either a human or a machine. In this context, duration $L_s$ of the digital audio signal can be any duration that is shorter than the duration of the music track 11 itself and can be determined by taking into account factors such as copyright limitations, or the most efficient use of computing power.

In a next step 202, a Mel-spectrogram 2A, and a Mel Frequency Cepstral Coefficients (MFCC) matrix 2B is calculated from the digital audio signal 1 using a low-level feature extractor module 23.

Mel Frequency Cepstral Coefficients (MFCCs) are used in digital signal processing as a compact representation of the spectral envelope of a digital audio signal and provide a good description of the timbre of a digital audio signal 1. This step 202 can comprise further sub-steps. In an implementation, a lowpass filter is applied to the digital audio signal 1 before calculating the linear frequency spectrogram, preferably followed by downsampling the digital audio signal 1 to a single channel (mono) signal using a sample rate of 22050 Hz.

In a possible embodiment, the Mel-spectrogram and the MFCCs are computed by extracting a number of Mel frequency bands from a Short-Time Fourier Transform of the digital audio signal 1 using a Hanning window of 1024 samples with 512 samples of overlap (50% of overlap). In possible embodiments the number of Mel bands ranges from 10 to 50, more preferably from 20 to 40, more preferably the number of used Mel bands is 34. In a possible embodiment, the formulation of the Mel-filters uses the HTK formula. In a possible embodiment, each of the bands of the Mel-spectrogram is divided by the number of filters in the band.

This step accounts for the non-linear frequency perception of the human auditory system while reducing the number of spectral values to a fewer number of Mel bands. Further reduction of the number of bands can be achieved by applying a non-linear companding function, such that higher Mel-bands are mapped into single bands under the assumption that most of the rhythm information in the music signal is located in lower frequency regions. In a possible embodiment, the MFCCs are calculated by applying a cosine transformation on the Mel spectrogram. The MFCCs can then be concatenated into an MFCC matrix 2B.

In possible embodiments, the size of the Mel-spectrogram 2A, and the MFCC matrix 2B ranges between the dimensions of 1 to 100 rows and 1 to 1000 columns, with a preferred size of 34x612.

In a next step 203, the Mel-spectrogram 2A and MFCC matrix 2B are processed using a low-level feature pre-processor module 24. The Mel-spectrogram 2A is subjected separately to at least a Multi Auto Regression Analysis (MARA) process and a Dynamic Histogram (DH) process. The MFCC matrix 2B is subjected separately to at least an Auto Regression Analysis (ARA) process and a MARA process. The output of each MARA process is a first order multivariate autoregression matrix (with a preferred size of 34x34), the output of each ARA process is a third order autoregression matrix (with a preferred size of 34x4), and the output of each DH process is a dynamic histogram matrix (with a preferred size of 17x12), thus resulting in altogether at least 4 matrices (two first order multivariate autoregression matrices, a dynamic histogram matrix, and a third order autoregression matrix).

In a next step 204, a number $n_f$ of high-level feature values 5 are calculated using an ensemble learning module 25. In an embodiment, the ensemble learning module 25 comprises a number $n_f$ of ensemble learning blocks 25A, each ensemble learning block 25A further comprising a number $n_{GP}$ of parallelly executed Gaussian Processes (GPs), wherein each of the learning blocks 25A is configured to predict as an output one specific high-level feature value 5.

In possible embodiments, the number of parallelly executed GPs is between $1 < n_{GP} \leq 10$, more preferably $1 < n_{GP} \leq 5$.

In a most preferred embodiment, the number of parallelly executed GPs is $n_{GP} = 4$.

In further possible embodiments, the number $n_f$ of high-level feature values 5 and ensemble learning blocks 25A is between $1 \leq n_f \leq 256$, more preferably between $10 \leq n_f \leq 50$. In a preferred embodiment $n_f = 34$.

Within the step of calculating 204 high-level feature values 5, in a first step 2041 the output matrices from the low-level feature pre-processor module 24 are fed as a group parallelly into all of the ensemble learning blocks 25A within the ensemble learning module 25.

In an embodiment, the at least 4 output matrices from the low-level feature pre-processor module 24 are fed into the ensemble learning blocks 25A so that each of the GPs within the ensemble learning block 25A receives at least one of the output matrices.

In a possible embodiment, the output matrices are fed into the ensemble learning blocks 25A so that each of the GPs within the ensemble learning block 25A receives exactly one of the output matrices.

In a preferred embodiment, 4 output matrices (two first order multivariate autoregression matrices, a dynamic histogram matrix, and a third order autoregression matrix) are fed into a number $n_f$ of ensemble learning blocks 25A so that each of the 4 GPs within one ensemble learning block 25A receives exactly one of the output matrices.

After processing the output matrices from the low-level feature pre-processor module 24, each GP outputs a predicted high-level feature value ($X_p$) 5A.

In a next step 2042, the best candidate from the predicted high-level feature values 5A is selected as the output high-level feature value 5 of each ensemble learning block 25A. The selection is automatic and based on statistical data of predicting probabilities of the different GPs regarding a certain high-level feature value 5 that the respective ensemble learning block 25A is expected to predict.

In a final step 205 a descriptor vector 6 is calculated by concatenating the number $n_f$ of high-level feature values 5 obtained as the output of the number $n_f$ of ensemble learning blocks 25A within the ensemble learning module 25.

In an exemplary embodiment illustrated in Fig. 11, the step 2042 of picking the best candidate from the predicted high-level feature values 5A comprises

determining 2043 the GP within the ensemble learning block 25A with the lowest probability to predict the high-level feature value 5 that the respective ensemble learning block 25A is expected to predict, using a predefined database of statistical probabilities regarding the ability of each GP to predict a certain high-level feature value 5.

For each high-level feature value 5 of the descriptor vector 6, and for each GP component, it has been rated how confident a specific combination is to predict the correct high-level feature value 5. All the information is available in a database. As an example, for the GP1 component, when 'Blues' is predicted with the value '5', the confidence of that prediction is 0.85, meaning that the correct prediction is achieved 85% of the time.

The output of the identified GP with the lowest correct prediction probability is then discarded and, from the remaining outputs 5A, the output 5A with a median numerical value is picked 2044 as the high-level feature value 5 predicted by the ensemble learning block 25A.

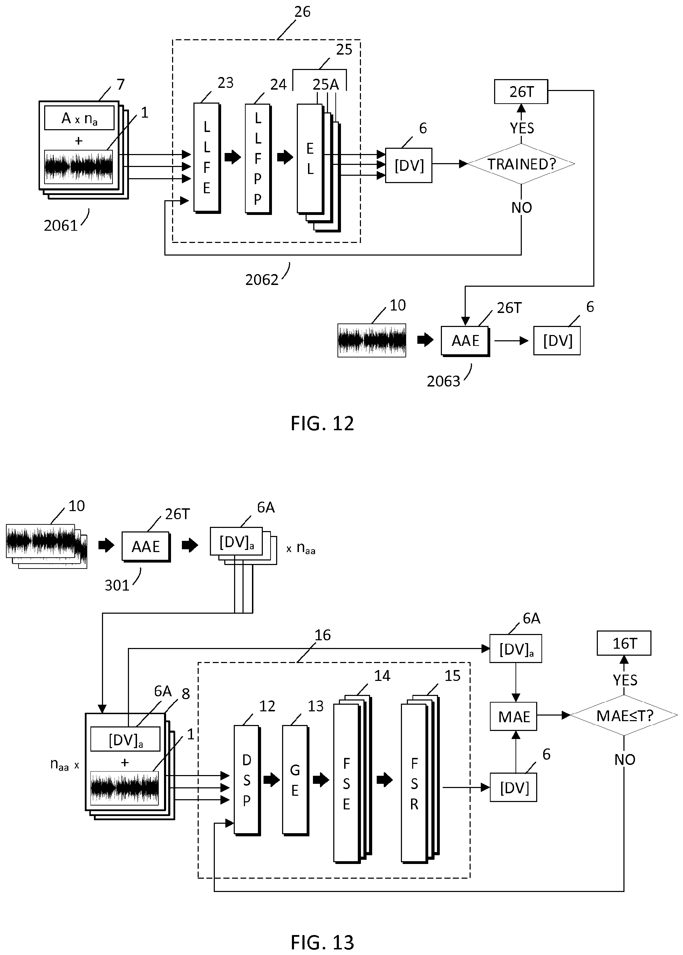

Fig. 12 shows a flow diagram illustrating the training method of an auto-annotating engine 26 in accordance with the present disclosure. In this implementation, steps and features that are the same or similar to corresponding steps and features previously described or shown herein are denoted by the same reference numeral as previously used for simplicity.

The auto-annotating engine 26 comprises a low-level feature extractor module 23, a low-level feature pre-processor module 24, and an ensemble learning module 25 according to any of the possible embodiments described above.

In an initial step 2061, a number of annotated digital audio signals 7 are provided, wherein each annotated digital audio signal 7 comprises a number of annotations, the number of annotations comprising ground truth values for high-level features of the respective annotated digital audio signal 7. In a next step 2062, the auto-annotating engine 26 is trained by training the Gaussian Processes using ordinal regression, using the annotated digital audio signals 7 as input. This training step 2062 results in a trained auto-annotating engine 26T.

In a final step 2063, descriptor vectors 6 comprising predicted high-level features are calculated, using the trained auto-annotating engine 26T, for unannotated digital audio signals 10.

In possible embodiments, the total number $n_a$ of annotations is between $1 \leq n_a \leq 100,000$, more preferably between $50,000 \leq n_a \leq 100,000$ most preferably between $70,000 \leq n_a \leq 80,000$.

In regression tasks, it is common to report metrics such as the Mean Squared Error, MSE, and the coefficient of determination, $R^2$. In the same way as in MAE, the lower the score, the better. However, for $R^2$, the best score is 1.0.

Table 1 reports the testing results for these three metrics for both the Auto-annotating Engine (AAE) 26 and the Descriptor Profiler Engine (DPE) 16 in accordance with the present disclosure.

(Table 1)

| Metric | AAE | DPE |
|--------|-----|-----|
| MAE | $1.08 \pm 0.00$ | $0.88 \pm 0.19$ |
| MSE | $2.45 \pm 0.00$ | $1.69 \pm 0.59$ |
| $R^2$ | $0.44 \pm 0.00$ | $0.57 \pm 0.14$ |

Fig. 13 shows a flow diagram illustrating a further possible embodiment of the method step of training the descriptor profiler engine 16 in accordance with the present disclosure.

In this implementation, steps and features that are the same or similar to corresponding steps and features previously described or shown herein are denoted by the same reference numeral as previously used for simplicity.

In this particular embodiment, which connects the two models of the auto-annotating engine 26 and the descriptor profiler engine 16, the associated descriptor vectors 6A, during the step 1101 of providing the number $n_{aa}$ of auto-annotated digital audio signals 8 for the descriptor profiler engine 16, are calculated using a trained auto-annotating engine 26T according to any of the embodiments described above.

Fig. 14 shows a schematic view of an illustrative computer-based system 20 in accordance with the present disclosure. In this implementation, steps and features that are the same or similar to corresponding steps and features previously described or shown herein are denoted by the same reference numeral as previously used for simplicity.

The computer-based system 20 may include a processor 21, a storage device 22, a memory 27, a communications interface 28, an internal bus 29, an input interface 30, and an output interface 31, and other components not shown explicitly in Fig. 14, such as a power supply for providing power to the components of the computer-based system 20.

In some embodiments the computer-based system 20 includes a digital signal processor (DSP) module 12 configured to calculate a low-level feature matrix 2 from a digital audio signal 1; a general extractor (GE) module 13 configured to calculate a high-level feature matrix 3 from a low-level feature matrix 2; a feature-specific extractor (FSE) module 14 configured to calculate high-level feature vectors 4 from a high-level feature matrix 3; a feature-specific regressor (FSR) module 15 configured to calculate high-level feature values 5 from high-level feature vectors 4; and optionally, a descriptor profiler engine 16 comprising a DSP module 12, a GE module 13, an FSE module, and an FSR module in accordance with the present disclosure.

In some embodiments the computer-based system 20 further includes a low-level feature extractor module (LLFE) 23 configured to process a digital audio signal 1 and extract therefrom a Mel-spectrogram 2A and/or an MFCC matrix 2B; a low-level feature pre-processor (LLFPP) module 24 configured to process a Mel-spectrogram 2A and/or an MFCC matrix 2B; an ensemble learning (EL) module 25 comprising ensemble learning blocks 25A configured to calculate one or more high-level feature values 5 from the output data from the LLFPP module 24; and optionally an auto-annotating engine 26 comprising an LLFE module 23, an LLFPP module 24, and an EL module 25 in accordance with the present disclosure.

While only one of each component is illustrated, the computer-based system 20 can include more than one of some or all of the components.

A processor 21 may control the operation and various functions of the computer-based system 20. As described in detail above, the processor 21 can be configured to control the components of the computer-based system 20 to execute a method for determining a compact semantic representation of a digital audio signal 1 in accordance with the present disclosure. The processor 21 can include any components, circuitry, or logic operative to drive the functionality of the computer-based system 20. For example, the processor 21 can include one or more processors acting under the control of an application.

A storage device 22 may store information and instructions to be executed by the processor 21. The storage device 22 can be any suitable type of storage medium offering permanent or semi-permanent memory. For example, the storage device 22 can include one or more storage mediums, including for example, a hard drive, Flash, or other EPROM or EEPROM.

In some embodiments, instructions (optionally in form of an executed application) can be stored in a memory 22. The memory 22 can include cache memory, flash memory, read only memory, random access memory, or any other suitable type of memory. In some embodiments, the memory 22 can be dedicated specifically to storing firmware for a processor 21. For example, the memory 22 can store firmware for device applications.

An internal bus 29 may provide a data transfer path for transferring data to, from, or between a storage device 22, a processor 21, a memory 27, a communications interface 28, and some or all of the other components of the computer-based system 20.

A communications interface 28 enables the computer-based system 20 to communicate with other computer-based systems, or enables devices of the computer-based system (such as a client and server) to communicate with each other, either directly or via a computer network 34. For example, communications interface 28 can include Wi-Fi enabling circuitry that permits wireless communication according to one of the 802.11 standards or a private network. Other wired or wireless protocol standards, such as Bluetooth, can be used in addition or instead.

An input interface 30 and output interface 31 can provide a user interface for a user 33 to interact with the computer-based system 20.

An input interface 30 may enable a user to provide input and feedback to the computer-based system 20. The input interface 30 can take any of a variety of forms, such as one or more of a button, keypad, keyboard, mouse, dial, click wheel, touch screen, or accelerometer.

An output interface 31 can provide an interface by which the computer-based system 20 can provide visual or audio output to a user 33 via e.g. an audio interface or a display screen. The audio interface can include any type of speaker, such as computer speakers or headphones, and a display screen can include, for example, a liquid crystal display, a touchscreen display, or any other type of display.

The computer-based system 20 may comprise a client device or a server, or both a client device and a server in data communication.

The client device may be a portable media player, a cellular telephone, pocket-sized personal computer, a personal digital assistant (PDA), a smartphone, a desktop computer, a laptop computer, and any other device capable of communicating via wires or wirelessly (with or without the aid of a wireless enabling accessory device).

The server may include any suitable types of servers that are configured to store and provide data to a client device (e.g., file server, database server, web server, or media server). The server can store media and other data (e.g., digital audio signals 1 of music tracks 11, and any type of associated information such as metadata or descriptor vectors 6), and the server can receive data download requests from the client device.

The server can communicate with the client device over a communications link which can include any suitable wired or wireless communications link, or combinations thereof, by which data may be exchanged between server and client. For example, the communications link can include a satellite link, a fiber-optic link, a cable link, an Internet link, or any other suitable wired or wireless link. The communications link is in an embodiment configured to enable data transmission using any suitable communications protocol supported by the medium of the communications link. Such communications protocols may include, for example, Wi-Fi (e.g., a 802.11 protocol), Ethernet, Bluetooth (registered trademark), radio frequency systems (e.g., 900 MHz, 2.4 GHz, and 5.6 GHz communication systems), infrared, TCP/IP (e.g., and the protocols used in each of the TCP/IP layers), HTTP, BitTorrent, FTP, RTP, RTSP, SSH, any other communications protocol, or any combination thereof.

There may further be provided a database on the server, configured to store a plurality of digital audio signals 1 and/or associated metadata or descriptor vectors 6 as explained above, whereby the database may be part of, or in data communication with, the client device and/or the server device. The database can also be a separate entity in data communication with the client device.

Fig. 15 illustrates using a combination of descriptor vectors 6 as compact semantic representation of a music track 11A in accordance with the present disclosure. In this implementation, steps and features that are the same or similar to corresponding steps and features previously described or shown herein are denoted by the same reference numeral as previously used for simplicity.

In a first step, a number of digital audio signals 1 are extracted from the same music track 11A in accordance with a respective possible implementation of the method of the present disclosure as described above.

In a next step, a number of descriptor vectors 6 are calculated from the digital audio signals 1 in accordance with a respective possible implementation of the method of the present disclosure as described above.

In preferred embodiments, the descriptor vectors 6 are calculated from the digital audio signals 1 using either a trained auto-annotating engine 26T or a trained descriptor profiler engine 16T in accordance with the present disclosure. The descriptor vectors 6 can be stored in a database separately, or in an arbitrary or temporally ordered combination, as a compact semantic representation of the music track 11A.

The above steps are then repeated for at least one further music track 11B, resulting in further digital audio signals 1, and ultimately, further descriptor vectors 6, which can also be stored in a database separately, or in an arbitrary or temporally ordered combination, as a compact semantic representation of the music track 11B.

In a next step, these compact semantic representations are used for determining similarities between the two music tracks 11A,11B according to any known method or device designed for determining similarities between entities based on associated numerical vectors. The result of such methods or devices are usually a similarity score between the music tracks.

Even though in this exemplary implementation only two music tracks 11A,11B are compared, it should be understood that the method can also be used for comparing a larger plurality of music tracks and for determining a similarity ranking between a plurality of music tracks.

In a possible embodiment, determining similarities between two or more music tracks 11 comprises calculating distances between the descriptor vectors 6 in the vector space. In a possible embodiment the distance between the descriptor vectors 6 is determined by calculating their respective pairwise (Euclidean) distances in the vector space, whereby the shorter pairwise (Euclidean) distance represents a higher degree of similarity between the respective descriptor vectors 6. In a further possible embodiment, the respective pairwise distances between the descriptor vectors 6 are calculated with the inclusion of an optional step whereby Dynamic Time Warping is applied between the descriptor vectors 6.

Similarly as above, the shorter pairwise (Euclidean) distance represents a higher degree of similarity between the respective descriptor vectors 6.

In another possible embodiment, determining the similarities comprises calculating an audio similarity index between each of the music tracks 11 by comparing their respective descriptor vectors 6 separately, or in an arbitrary or temporally ordered combination (according to their compact semantic representations). The audio similarity indexes may be stored (and optionally visualized) in the form of an audio similarity matrix 32, wherein each row and column represents a high-level feature value 5 or one of the plurality of music tracks 11, and each value in the matrix 32 is the audio similarity index between the respective high-level feature values 5 or the music tracks 11 that their column and row represent. Thus, the diagonal values of the matrix 32 will always be of highest value as they show the highest possible degree of similarity.

The audio similarity matrices 32 between each of the two (or more) music tracks 11A,11B can later be used to generate similarity-based playlists of the music tracks 11, or to categorize a multitude of music tracks 11 into groups according to musical or emotional characteristics.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope.

## Claims

1. A method for determining a compact semantic representation of a digital audio signal using a computer-based system (20), the method comprising:

     providing (101) a digital audio signal (1);
     calculating (102), using a digital signal processor module (12), a low-level feature matrix (2) from said digital audio signal (1), said low-level feature matrix (2) comprising numerical values corresponding to a low-level audio feature in a temporal sequence;
     calculating (103), using a general extractor module (13), a high-level feature matrix (3) from said low-level feature matrix (2), said high-level feature matrix (3) comprising numerical values corresponding to a high-level audio feature;
     calculating (104), using a feature-specific extractor module (14), a number $n_f$ of high-level feature vectors (4) from said high-level feature matrix (3), each high-level feature vector (4) comprising numerical values corresponding to a high-level audio feature;
     calculating (105), using a feature-specific regressor module (15), a number $n_f$ of high-level feature values (5) from said number $n_f$ of high-level feature vectors (4); wherein each high-level feature value (5) represents a musical or emotional characteristic of said digital audio signal (1); and
     calculating (106) a descriptor vector (6) by concatenating said number $n_f$ of high-level feature values (5)

     **characterized in that**
     said general extractor module (13) uses a pre-trained Convolutional Neural Network, CNN, model (17) pre-trained (107) in isolation from the rest of the modules as a musical genre classifier model;
     wherein the architecture of said CNN model (17) comprises:

         an input block (171) configured for normalizing said low-level feature matrix (2) using a batch normalization layer; followed by four consecutive convolutional blocks (172); and an output layer (173).

2. A method according to claim 1, wherein said low-level feature matrix (2) is a vertical concatenation of the Mel-spectrogram of said digital audio signal (1) and its subsequent first and second derivatives.

3. A method according to claim 1, wherein each of said four consecutive convolutional blocks (172) comprises

     a 2-dimensional convolutional layer (1721),
     a batch normalization layer (1722),
     an Exponential Linear Unit (1723),
     a 2-dimensional max pooling layer (1724), and
     a dropout layer (1725); and
     wherein the convolutional layer (1721) of the first convolutional block comprises 64 filters, while the convolutional layers (1721) of the further consecutive blocks comprise 128 filters.

**4.** A method according to claim 1, wherein said CNN model (17) is pre-trained (107) by

replacing said output layer (173) with a recurrent layer (174) and a decision layer (175) in the architecture of said CNN model (17);
providing a number $n_l$ of labeled digital audio signals (9), wherein each labeled digital audio signal (9) comprises an associated ground truth musical genre;
training said CNN model (17) by using said labeled digital audio signals (9) as input, and iterating over a number of N epochs; and
after the training, replacing said recurrent layer (174) and decision layer (175) with an output layer (173) in the architecture of said CNN model (17);
wherein said number $n_l$ is $1 \leq n_l \leq 100,000,000$, more preferably $100,000 \leq n_l \leq 10,000,000$, more preferably $300,000 \leq n_l \leq 400,000$, most preferably $n_l = 340,000$; and
wherein said number of training epochs is $1 \leq N \leq 1000$, more preferably $1 \leq N \leq 100$, most preferably N = 40.

**5.** A method according to claim 4, wherein said recurrent layer (174) comprises two Gated Recurrent Units, GRU, layers (1741), and a dropout layer (1742); and
wherein said decision layer (175) comprises a fully connected layer (1751).

**6.** A method according to any one of claims 1 to 5, wherein

said feature-specific extractor module (14) uses an ensemble of a number $n_f$ of a pre-trained Recurrent Neural Network, RNN, models (18), wherein the architecture of said RNN models (18) may differ from each other,
wherein a preferred RNN model (18) architecture comprises two Gated Recurrent Units, GRU, layers (181), and
a dropout layer (182).

**7.** A method according to claim 6, wherein each of said RNN models (18) in the ensemble is pre-trained (108) as a regressor to predict one target value from said number $n_f$ of high-level feature values (5) by

providing an additional, fully connected layer (183) of one unit in the architecture of said RNN model (18),
providing a number of annotated digital audio signals (7), wherein each annotated digital audio signal (7) comprises a number of annotations, said number of annotations comprising ground truth values $X_{GT}$ for high-level features of the respective annotated digital audio signal (7);
training each RNN model (18) to predict one target value $X_P$ from said high-level feature values (5) by using said annotated digital audio signals (7) as input, and iterating until the Mean Absolute Error, MAE, between said one predicted target value $X_P$ and the corresponding ground truth value $X_{GT}$ meets a predefined threshold T; and
after the training, removing said fully connected layer (183) from the architecture of said RNN model (18);
wherein the total number $n_a$ of annotations is $1 \leq n_a \leq 100,000$, more preferably $50,000 \leq n_a \leq 100,000$ more preferably $70,000 \leq n_a \leq 80,000$.

**8.** A method according to any one of claims 1 to 7, wherein said feature-specific regressor module (15) uses an ensemble of a number $n_f$ of a pre-trained Gaussian Process Regressor, GPR, models (19), wherein

each GPR model (19) is specifically configured to one target value from said number $n_f$ of high-level feature values (5), and wherein
each GPR model (19) uses a rational quadratic kernel, wherein the kernel function k for points $x_i, x_j$ is given by:

$$k(x_i, x_j) = \sigma \left( 1 + \frac{(x_i - x_j)^2}{(2\alpha l^2)} \right)^{-\alpha}$$

wherein $\{\sigma, \alpha, l\} \in [0.0, 0.2, 0.4, 0.6, 0.8, 1.0, 1.2, 1.4, 1.6, 1.8]$ .

**9.** A method according to claim 8, wherein each of said GPR models (19) in the ensemble is pre-trained (109) as a regressor to predict one target value from said number $n_f$ of high-level feature values (5) by

providing (1091) a number of annotated digital audio signals (7), wherein each annotated digital audio signal (7) comprises a number of annotations, said number of annotations comprising ground truth values for high-level features of the respective annotated digital audio signal (7);
training (1092) each GPR model (19) to predict one target value from said high-level feature values (5) by using said annotated digital audio signals (7) as input, and iterating until the Mean Absolute Error, MAE, between said one predicted target value and the corresponding ground truth value meets a predefined threshold;
repeating (1093) the above steps by performing a hyperparameter grid search on the para-

meters $\sigma$, $\alpha$ and $l$ of the kernel by assigning each parameter a value from a predefined list of [0.0, 0.2, 0.4, 0.6, 0.8, 1.0, 1.2, 1.4, 1.6, 1.8], and using Mean Squared Error, MSE, as the evaluation metric, until the combination of three hyperparameters that obtain the lowest MSE are identified; and

keeping (1094) the model with the smallest error by comparing said MAE and MSE;

wherein the total number $n_a$ of annotations is $1 \leq n_a \leq 100{,}000$, more preferably $50{,}000 \leq n_a \leq 100{,}000$ more preferably $70{,}000 \leq n_a \leq 80{,}000$.

10. A method according to any one of claims 1 to 9, further comprising training (110) a descriptor profiler engine (16), said descriptor profiler engine (16) comprising said digital signal processor module (12), said general extractor module (13), said feature-specific extractor module (14), and said feature-specific regressor module (15); by

providing (1101) a number $n_{aa}$ of auto-annotated digital audio signals (8), wherein each auto-annotated digital audio signal (8) comprises an associated descriptor vector (6A) comprising truth values for different musical or emotional characteristics of said digital audio signal (1);

training (1102) said descriptor profiler engine (16) by using said auto-annotated digital audio signals (8) as input, and iterating said modules until the Mean Absolute Error, MAE, between calculated values of descriptor vectors (6) and truth values of associated descriptor vectors (6A) meets a predefined threshold; and calculating (1103), using the trained descriptor profiler engine (16T), descriptor vectors (6) for un-annotated digital audio signals (10) with no associated descriptor vectors (6A),

wherein said number $n_{aa}$ is $1 \leq n_{aa} \leq 100{,}000{,}000$, more preferably $100{,}000 \leq n_{aa} \leq 1{,}000{,}000$, more preferably $500{,}000 \leq n_{aa} \leq 600{,}000$.

11. A computer-based system (20) for determining a compact semantic representation of a digital audio signal (1), the system comprising

a processor (21);
a storage device (22) configured to store one or more digital audio signals (1);
a digital signal processor module (12) configured to calculate a low-level feature matrix (2) from said digital audio signal (1);
a general extractor module (13) configured to calculate a high-level feature matrix (3) from said low-level feature matrix (2);
a feature-specific extractor module (14) configured to calculate one or more high-level feature vectors (4) from said high-level feature matrix (3);
wherein said general extractor module (13) uses a pre-trained Convolutional Neural Network, CNN, model (17) pre-trained (107) in isolation from the rest of the modules as a musical genre classifier model;
wherein the architecture of said CNN model (17) comprises:

an input block (171) configured for normalizing said low-level feature matrix (2) using a batch normalization layer;
followed by four consecutive convolutional blocks (172); and an output layer (173);
a feature-specific regressor module (15) configured to calculate one or more high-level feature values (5) from said one or more high-level feature vectors (4); and
optionally, a descriptor profiler engine (16) comprising said digital signal processor module (12), said general extractor module (13), said feature-specific extractor module, and said feature-specific regressor module;
wherein the storage device (22) is further configured to store instructions that, when executed by said processor (21), cause the computer-based system (20) to perform a method according to any one of claims 1 to 10.

12. A method for determining a compact semantic representation of a digital audio signal (1) using a computer-based system (20), the method comprising:

providing (201) a digital audio signal (1);
calculating (202), using a low-level feature extractor module (23), from said digital audio signal (1), a Mel-spectrogram (2A), and a Mel Frequency Cepstral Coefficients, MFCC, matrix (2B);
processing (203), using a low-level feature pre-processor module (24) said Mel-spectrogram (2A) and MFCC matrix (2B), wherein said Mel-spectrogram (2A) is subjected separately to at least a Multi Auto Regression Analysis, MARA, process and a Dynamic Histogram, DH, process, and said MFCC matrix (2B) is subjected separately to at least an Auto Regression Analysis, ARA, process and a MARA process, wherein the output of each MARA process is a first order multivariate autoregression matrix, the output of each ARA process is a third order autoregression matrix, and the output of each DH process is a dynamic histogram matrix; and calculating (204), using an ensemble learning module (25), a number $n_f$ of high-level feature values (5) by feeding (2041) the output matrices from said low-level feature pre-processor module (24) as a group parallelly into a number $n_f$ of ensemble learning blocks (25A) within said ensemble learning module (25), each ensemble learning block (25A) further comprising a number $n_{GP}$ of parallelly executed Gaussian Processes, GPs, wherein each of said GPs receives at least one of said output matrices and outputs a predicted high-level feature value (5A), and picking (2042), as the output of each ensemble learning block (25A), the best candidate from said predicted high-level feature values (5A), using statistical data, as one of said number $n_f$ of high-level feature values (5), wherein each high-level feature value (5) represents a musical or emotional characteristic of said digital audio signal (1); and

calculating (205) a descriptor vector (6) by concatenating said number $n_f$ of high-level feature values (5).

13. A method according to claim 12, wherein picking (2042) the best candidate from said predicted high-level feature values (5A) comprises

determining (2043), using a predefined database of statistical probabilities regarding the ability of each GP to predict a certain high-level feature value (5), the GP within the ensemble learning block (25A) with the lowest probability to predict the respective high-level feature value (5), and discarding its output (5A); and

picking (2044) the predicted high-level feature value (5) with a numerical value in the middle from within the remaining outputs (5A).

14. A method according to any one of claims 12 or 13,

further comprising training (206) an auto-annotating engine (26), said auto-annotating engine (26) comprising said low-level feature extractor module (23), said low-level feature pre-processor module (24), and said ensemble learning module (25);

providing (2061) a number of annotated digital audio signals (7), wherein each annotated digital audio signal (7) comprises a number of annotations, said number of annotations comprising ground truth values for high-level features of the respective annotated digital audio signal (7);

training (2062) said auto-annotating engine (26) by using said annotated digital audio signals (7) as input and training said Gaussian Processes using ordinal regression; and

calculating (2063), using the trained auto-annotating engine (26T), descriptor vectors (6) for un-annotated digital audio signals (10), said descriptor vectors (6) comprising predicted high-level features,

wherein the total number $n_a$ of annotations is $1 \leq n_a \leq 100,000$, more preferably $50,000 \leq n_a \leq 100,000$ more preferably $70,000 \leq n_a \leq 80,000$.

15. A computer-based system (20) for determining a compact semantic representation of a digital audio signal (1), the system comprising

a processor (21);

a storage device (22) configured to store one or more digital audio signals (1);

a low-level feature extractor module (23) configured to calculate, from said digital audio signal (1), a Mel-spectrogram (2A), and a Mel Frequency Cepstral Coefficients, MFCC, matrix (2B);

a low-level feature pre-processor module (24) configured to process said Mel-spectrogram (2A) using a Multi Auto Regression Analysis, MARA, process and a Dynamic Histogram, DH, process, and to process said MFCC matrix (2B) using an Auto Regression Analysis, ARA, process and a MARA process; an ensemble learning module (25) comprising a number $n_f$ of ensemble learning blocks (25A) configured to calculate one or more high-level feature values (5) from the output data from the processes of said low-level feature pre-processor module (24) using a number $n_{GP}$ of parallelly executed Gaussian Processes, GPs; and

optionally, an auto-annotating engine (26) comprising said low-level feature extractor module (23), said low-level feature pre-processor module (24), and said ensemble learning module (25);

wherein the storage device (22) is further configured to store instructions that, when executed by said processor (21), cause the computer-based system (20) to perform a method according to any one of claims 12 to 14.

16. A method according to claim 10, wherein providing said number $n_{aa}$ of auto-annotated digital audio signals (8) comprises:

calculating (301) said associated descriptor vector (6A) using a method according to any one of claims 12 to 14.

17. A method according to any one of claims 1 to 10, or 12 to 14, further comprising:

storing said descriptor vector (6) in a database alone, or in an arbitrary or temporally ordered combination with further one or more descriptor vectors (6), as a compact semantic representation of a music track (11A),
wherein each of said descriptor vectors (6) are calculated from different audio signals (1) extracted from said same music track (11A).

## Patentansprüche

1. Verfahren zur Bestimmung von kompakten semantischen Darstellungen von digitalen Audiosignalen, unter Verwendung eines computerbasierten Systems (20), das Verfahren umfassend:

   Bereitstellen (101) eines digitalen Audiosignals (1);
   Berechnen (102), unter Verwendung eines digitalen Signalprozessormoduls (12), einer Low-Level-Feature-Matrix (2) aus diesem digitalen Audiosignal (1), diese Low-Level-Feature-Matrix (2) umfasst numerische Werte, die einem Low-Level-Audio-Feature in einer temporären Sequenz entsprechen;
   Berechnen (103), unter Verwendung eines allgemeinen Extraktormoduls (13), einer High-Level-Feature-Matrix (3) aus dieser Low-Level-Feature-Matrix (2), wobei diese High-Level-Feature-Matrix (3) numerische Werte umfasst, die einem High-Level-Audio-Feature entsprechen;
   Berechnen (104), unter Verwendung eines Feature-spezifischen Extraktormoduls (14), einer Anzahl $n_f$ von High-Level-Feature-Vektoren (4) aus dieser High-Level-Feature-Matrix (3), wobei jeder High-Level-Feature-Vektor (4) numerische Werte umfasst, die einem High-Level-Audio-Feature entsprechen;
   Berechnen (105), unter Verwendung eines Feature-spezifischen Regressormoduls (15), einer Anzahl $n_f$ von High-Level-Feature-Werten (5) aus der Anzahl $n_f$ von High-Level-Feature-Vektoren (4); wobei
   jeder High-Level-Feature-Wert (5) eine musikalische oder emotionale Eigenschaft dieses digitalen Audiosignals (1) repräsentiert; und
   Berechnen (106) eines Deskriptor-Vektors (6) durch Verknüpfen der Anzahl $n_f$ von High-Level-Feature-Werten (5),
   **dadurch gekennzeichnet, dass**
   das allgemeine Extraktormodul (13) ein vortrainiertes Modell des Convolutional Neural Network, CNN, (17) verwendet, das in Isolation von dem Rest der Module als ein Klassifizierungsmodell aus dem Musikgenre vortrainiert (107) wurde;
   wobei die Architektur dieses CNN-Modells (17) Folgendes umfasst:

   Einen Eingabeblock (171), der konfiguriert ist, die Low-Level-Feature-Matrix (2) unter Verwendung einer Batch-Normalisierungsschicht zu normalisieren; gefolgt von vier aufeinanderfolgenden Faltungsblöcken (172); und
eine Ausgabeschicht (173).

2. Verfahren nach Anspruch 1, wobei die Low-Level-Feature-Matrix (2) eine vertikale Konkatenation des Mel-Spektrogramms dieses digitalen Audiosignals (1) und seiner nachfolgenden ersten und zweiten Ableitung ist.

3. Verfahren nach Anspruch 1, wobei jeder der vier aufeinanderfolgenden Faltungsblöcke (172)

   eine 2-dimensionale Faltungsschicht (1721),
   eine Batch-Normalisierungsschicht (1722),
   eine Exponential Linear Unit (1723),
   eine 2-dimensionale Max-Pooling-Schicht (1724), und
   eine Dropout-Schicht (1725) umfasst; und
   wobei die Faltungsschicht (1721) des ersten Faltungsblocks 64 Filter umfasst, während die Faltungsschichten (1721) der weiteren Faltungsblöcke 128 Filter umfassen.

4. Verfahren nach Anspruch 1, wobei das CNN-Modell (17) vortrainiert wird (107), indem die Ausgabeschicht (173) durch eine rekurrente Schicht (174) und eine Entscheidungsschicht (175) in der Architektur dieses CNN-Modells (17) ersetzt wird;

   Bereitstellen einer Anzahl $n_1$ von gekennzeichneten digitalen Audiosignalen (9), wobei jedes gekennzeichnete digitale Audiosignal (9) ein verbundenes Ground-Truth-Musikgenre umfasst; Trainieren des CNN-Modells (17) unter Verwendung der gekennzeichneten digitalen Audiosignale (9) als Eingabe, und Iterieren über eine Anzahl von N Epochen; und
   nach dem Trainieren, Ersetzen dieser rekurrenten Schicht (174) und Entscheidungsschicht (175) durch eine Ausgabeschicht (173) in der Architektur des CNN-Modells (17);
   wobei die Anzahl $n_1$ $1 \leq n_1 \leq 100.000.000$, mehr vorzuziehen $100.000 \leq n_1 \leq 10.000.000$, mehr vorzuziehen $300.000 \leq n_1 \leq 400.000$, am meisten vorzuziehen $n_1 = 340.000$ ist; und
   wobei die Anzahl von Trainings-Epochen $1 \leq N \leq 1000$, mehr vorzuziehen $1 \leq N \leq 100$, am meisten vorzuziehen N = 40 ist.

5. Verfahren nach Anspruch 4, wobei die rekurrente Schicht (174) zwei Schichten mit Gated Recurrent Units, GRU, (1741) und eine Dropout-Schicht (1742) umfasst; und
wobei die Entscheidungsschicht (175) eine Fully Connected Layer (1751) umfasst.

6. Verfahren nach einem der Ansprüche 1 bis 5, wobei das Feature-spezifische Extraktormodul (14) ein Ensemble einer Anzahl $n_1$ eines vortrainierten rekurrenten

    neuronalen Netz-Modells, RNN, (18) verwendet,
    wobei sich die Architektur der RNN-Modelle (18) voneinander unterscheiden kann,
    wobei eine bevorzugte RNN-Modell-Architektur (18)
    zwei Schichten mit Gated Recurrent Units, GRU, (181) und
    eine Dropout-Schicht (182) umfasst.

7. Verfahren nach Anspruch 6, wobei jedes der RNN-Modelle (18) in dem Ensemble als Regressor vortrainiert ist (108), um einen Zielwert der Anzahl $n_f$ der High-Level-Feature-Werte (5) vorherzusagen, durch

    Bereitstellen einer zusätzlichen Fully Connected Layer (183) einer Einheit in der Architektur des RNN-Modells (18),
    Bereitstellen einer Anzahl von annotierten digitalen Audiosignalen (7), wobei jedes annotierte digitale Audiosignal (7) eine Anzahl von Annotationen umfasst, wobei die Anzahl der Annotationen Ground-Truth-Werte $X_{GT}$ für High-Level-Feature des jeweiligen annotierten digitalen Audiosignals (7) umfasst;
    Trainieren jedes RNN-Modells (18), um einen Zielwert $X_P$ aus den High-Level-Feature-Werten (5) unter Verwendung der annotierten digitalen Audiosignale (7) als Eingabe vorherzusagen, und Iterieren bis der mittlere absolute Fehler, MAE, zwischen dem einen vorhergesagten Zielwert $X_P$ und dem entsprechenden Ground-Truth-Wert $X_{GT}$ einen vordefinierten Schwellenwert T erreicht; und
    nach dem Trainieren, Entfernen der Fully Connected Layer (183) aus der Architektur des RNN-Modells (18);
    wobei die Gesamtanzahl $n_a$ der Annotationen $1 \leq n_a \leq 100.000$, mehr vorzuziehen $50.000 \leq n_a \leq 100.000$ und mehr vorzuziehen $70.000 \leq n_a \leq 80.000$ beträgt.

8. Verfahren nach einem der Ansprüche 1 bis 7, wobei das Feature-spezifische Regressormodul (15) ein Ensemble einer Anzahl $n_f$ eines vortrainierten Gauß-Prozess-Regressormodells, GPR, (19) verwendet, wobei

    jedes GPR-Modell (19) spezifisch für einen Zielwert aus der Anzahl $n_f$ von High-Level-Feature-Werten (5) konfiguriert ist, und wobei jedes GPR-Modell (19) einen Rational Quadratic Kernel verwendet, wobei die Kernel-Funktion $k$ für die Punkte $x_i, x_j$ angegeben ist durch:

$$k(x_i, x_j) = \sigma \left( 1 + \frac{(x_i - x_j)^2}{(2\alpha l^2)} \right)^{-\alpha}$$

wobei $\{\sigma, \alpha, l\} \in [0.0, 0.2, 0.4, 0.6, 0.8, 1.0, 1.2, 1.4, 1.6, 1.8]$.

9. Verfahren nach Anspruch 8, wobei jedes der GPR-Modelle (19) in dem Ensemble als Regressor vortrainiert ist (109), um einen Zielwert der Anzahl $n_f$ der High-Level-Feature-Werte (5) vorherzusagen, durch

    Bereitstellen (1091) einer Anzahl von annotierten digitalen Audiosignalen (7), wobei jedes annotierte digitale Audiosignal (7) eine Anzahl von Annotationen umfasst, wobei die Anzahl der Annotationen Ground-Truth-Werte für High-Level-Feature des jeweiligen annotierten digitalen Audiosignals (7) umfasst;
    Trainieren (1092) jedes GPR-Modells (19), um einen Zielwert aus den High-Level-Feature-Werten (5) unter Verwendung der annotierten digitalen Audiosignale (7) als Eingabe vorherzusagen, und Iterieren bis der mittlere absolute Fehler, MAE, zwischen dem einen vorhergesagten Zielwert und dem entsprechenden Ground-Truth-Wert einen vordefinierten Schwellenwert erreicht;
    Wiederholen (1093) der obigen Schritte, indem eine Hyperparameter-Rastersuche für die Parameter $\sigma$, $\alpha$ und $l$ des Kernels durchgeführt und jedem Parameter ein Wert aus einer vordefinierten Liste von [0,0, 0,2, 0,4, 0,6, 0,8, 1,0, 1,2, 1,4, 1,6, 1,8] zugewiesen wird und die Mittlere quadratische Abweichung, MSE, als Bewertungsmetrik verwendet wird, bis die Kombination von drei Hyperparametern, die den niedrigsten MSE erreichen, identifiziert ist; und
    Beibehalten (1094) des Modells mit dem kleinsten Fehler durch Vergleich von MAE und MSE;
    wobei die Gesamtanzahl $n_a$ der Annotationen $1 \leq n_a \leq 100.000$, mehr vorzuziehen $50.000 \leq n_a \leq 100.000$ und mehr vorzuziehen $70.000 \leq n_a \leq 80.000$ beträgt.

10. Verfahren nach einem der Ansprüche 1 bis 9, ferner umfassend das Trainieren (110) einer Descriptor-Profiler-Engine (16), wobei diese Descriptor-Profiler-Engine (16) das digitale Signalprozessormodul (12), das allgemeine Extraktormodul (13), das Feature-spezifische Extraktormodul (14) und das Feature-spezifische Regressormodul (15) umfasst;

durch Bereitstellen (1101) einer Anzahl $n_{aa}$ von automatisch annotierten digitalen Audiosignalen (8), wobei jedes automatisch annotierte digitale Audiosignal (8) einen verbundenen Deskriptor-Vektor (6A) umfasst, der Wahrheitswerte für verschiedene musikalische oder emotionale Eigenschaften des digitalen Audiosignals (1) umfasst;

Trainieren (1102) der Descriptor-Profiler-Engine (16) unter Verwendung der automatisch annotierten digitalen Audiosignale (8) als Eingabe und Iterieren der Module bis der mittlere absolute Fehler, MAE, zwischen berechneten Werten der Deskriptor-Vektoren (6) und Wahrheitswerten verbundener Deskriptor-Vektoren (6A) einen vordefinierten Schwellenwert erreicht; und

Berechnen (1103), unter Verwendung der trainierten Descriptor-Profiler-Engine (16T), von Deskriptor-Vektoren (6) für nicht annotierte digitale Audiosignale (10) ohne verbundene Deskriptor-Vektoren (6A),

wobei die Anzahl $n_{aa}$ $1 \leq n_{aa} \leq 100.000.000$, mehr vorzuziehen $100.000 \leq n_{aa} \leq 1.000.000$ und mehr vorzuziehen $500.000 \leq n_{aa} \leq 600.000$ beträgt.

11. Computerbasiertes System (20) für das Bestimmen einer kompakten semantischen Darstellung eines digitalen Audiosignals (1), das System umfassend

einen Prozessor(21);

ein Speichergerät (22), das konfiguriert ist, ein oder mehrere digitale Audiosignale (1) zu speichern;

ein digitales Signalprozessormodul (12), das konfiguriert ist, eine Low-Level-Feature-Matrix (2) aus dem digitalen Audiosignal (1) zu berechnen;

ein allgemeines Extraktormodul (13), das konfiguriert ist, eine High-Level-Feature-Matrix (3) aus der Low-Level-Feature-Matrix (2) zu berechnen;

ein Feature-spezifisches Extraktormodul (14), das konfiguriert ist, einen oder mehrere High-Level-Feature-Vektoren (4) aus der High-Level-Feature-Matrix (3) zu berechnen;

wobei das allgemeine Extraktormodul (13) ein vortrainiertes Modell des Convolutional Neural Network, CNN,(17) verwendet, das in Isolation von dem Rest der Module als ein Klassifizierungsmodell aus dem Musikgenre vortrainiert (107) wurde;

wobei die Architektur dieses CNN-Modells (17) Folgendes umfasst:

Einen Eingabeblock (171), der konfiguriert ist, die Low-Level-Feature-Matrix (2) unter Verwendung einer Batch-Normalisierungsschicht zu normalisieren; gefolgt von vier aufeinanderfolgenden Faltungsblöcken (172); und

eine Ausgabeschicht (173);

ein Feature-spezifisches Regressormodul (15), das konfiguriert ist, einen oder mehrere High-Level-Feature-Werte (5) aus dem einen oder den mehreren High-Level-Feature-Vektoren (4) zu berechnen; und

optional eine Descriptor-Profiler-Engine (16), die das digitale Signalprozessormodul (12), das allgemeine Extraktormodul (13), das Feature-spezifische Extraktormodul und das Feature-spezifische Regressormodul umfasst;

wobei das Speichergerät (22) ferner konfiguriert ist, Anweisungen zu speichern, die, wenn sie von dem Prozessor (21) ausgeführt werden, das computerbasierte System (20) dazu veranlassen, ein Verfahren nach einem der Ansprüche 1 bis 10 auszuführen.

12. Verfahren zur Bestimmung von kompakten semantischen Darstellungen von digitalen Audiosignalen (1), unter Verwendung eines computerbasierten Systems (20), das Verfahren umfassend:

Bereitstellen (201) eines digitalen Audiosignals (1);

Berechnen (202), unter Verwendung eines Low-Level-Feature-Extraktormoduls (23), des digitalen Audiosignals (1), eines Mel-Spektrogramms (2A) und einer Matrix von Mel-Frequenz-Cepstrum-Koeffizienten, MFCC, (2B);

Verarbeiten (203), unter Verwendung eines Low-Level-Feature-Vorpozessormoduls (24), des Mel-Spektrogramms (2A) und der MFCC-Matrix (2B), wobei das Mel-Spektrogramm (2A) separat mindestens einem Prozess einer multivariaten Autoregressionsanalyse, MARA, und einem dynamischen Histogramm-Prozess, DH, unterworfen wird, und die MFCC-Matrix (2B) separat mindestens einem Prozess einer Autoregressionsanalyse, ARA, und einem MARA-Prozess unterworfen wird, wobei das Ergebnis jedes MARA-Prozesses eine multivariate Autoregressionsmatrix erster Ordnung ist, das Ergebnis jedes ARA-Prozesses eine Autoregressionsmatrix dritter Ordnung ist und das Ergebnis jedes DH-Prozesses eine dynamische Histogrammmatrix ist; und

Berechnen (204), unter Verwendung eines Ensemble-Lernmoduls (25), einer Anzahl $n_f$ von High-Level-Feature-Werten (5) durch

Eingeben (2041) der Ausgabematrizen aus dem Low-Level-Feature-Vorprozessormodul (24), als eine Gruppe, parallel in eine Anzahl $n_f$ von Ensemble-Lernblöcken (25A) innerhalb des Ensemble-Lernmoduls (25), wobei jeder Ensemble-Lernblock (25A) ferner eine Anzahl $n_{GP}$ von parallel ausgeführten Gauß-Prozessen, GPs, umfasst, wobei jeder der GPs mindestens entweder die Ausgabematrizen oder Ausgaben eines vorhergesagten High-Level-Feature-Werts (5A) empfängt, und

Auswählen (2042), als Ausgabe jedes Ensemble-Lernblocks (25A), des besten Kandidaten aus den vorhergesagten High-Level-Feature-Werten (5A), unter Verwendung statistischer Daten, als einem der Anzahl $n_f$ von High-Level-Feature-Werten (5), wobei jeder High-Level-Feature-Wert (5) eine musikalische oder emotionale Eigenschaft des digitalen Audiosignals (1) repräsentiert; und

Berechnen (205) eines Deskriptor-Vektors (6) durch Verknüpfen der Anzahl $n_f$ von High-Level-Feature-Werten (5).

13. Verfahren nach Anspruch 12, wobei das Auswählen (2042) des besten Kandidaten aus den vorhergesagten High-Level-Feature-Werten (5A)

das Bestimmen (2043), unter Verwendung einer vordefinierten Datenbank statistischer Wahrscheinlichkeiten, hinsichtlich der Fähigkeit jedes GP, einen bestimmten High-Level-Feature-Wert (5) vorherzusagen, des GP innerhalb des Ensemble-Lernblocks (25A) mit der geringsten Wahrscheinlichkeit umfasst, den entsprechenden High-Level-Feature-Wert (5) vorherzusagen, und Verwerfen seiner Ausgabe (5A); und

Auswählen (2044) des vorhergesagten High-Level-Feature-Werts (5) mit einem numerischen Wert in der Mitte aus den verbleibenden Ausgaben (5A).

14. Verfahren nach einem der Ansprüche 12 oder 13, ferner umfassend das Trainieren (206) einer automatischen Annotations-Engine (26), wobei diese automatische Annotations-Engine (26) das Low-Level-Feature-Extraktormodul (23), das Low-Level-Feature-Vorprozessormodul (24) und das Ensemble-Lernmodul (25) umfasst;

Bereitstellen (2061) einer Anzahl von annotierten digitalen Audiosignalen (7), wobei jedes annotierte digitale Audiosignal (7) eine Anzahl von Annotationen umfasst, wobei die Anzahl der Annotationen Ground-Truth-Werte für High-Level-Feature des jeweiligen annotierten digitalen Audiosignals (7) umfasst;

Trainieren (2062) der automatischen Annotations-Engine (26) unter Verwendung der annotierten digitalen Audiosignale (7) als Eingabe und Trainieren der Gauß-Prozesse unter Verwendung einer ordinalen Regression; und

Berechnen (2063), unter Verwendung der trainierten automatischen Annotations-Engine (26T), von Deskriptor-Vektoren (6) für nicht annotierte digitale Audiosignale (10), wobei die Deskriptor-Vektoren (6) vorhergesagte High-Level-Feature umfassen,

wobei die Gesamtanzahl $n_a$ der Annotationen $1 \leq n_a \leq 100.000$, mehr vorzuziehen $50.000 \leq n_a \leq 100.000$ und mehr vorzuziehen $70.000 \leq n_a \leq 80.000$ beträgt.

15. Computerbasiertes System (20) für das Bestimmen einer kompakten semantischen Darstellung eines digitalen Audiosignals (1), das System umfassend

einen Prozessor (21);

ein Speichergerät (22), das konfiguriert ist, ein oder mehrere digitale Audiosignale (1) zu speichern;

ein Low-Level-Feature-Extraktormodul (23), das konfiguriert ist, aus dem digitalen Audiosignal (1), ein Mel-Spektrogramm (2A) und eine Matrix von Mel-Frequenz-Cepstrum-Koeffizienten, MFCC, (2B) zu berechnen;

ein Low-Level-Feature-Vorprozessormodul (24), das konfiguriert ist, das Mel-Spektrogramm (2A) unter Verwendung eines Prozesses einer multivariaten Autoregressionsanalyse, MARA, und einem dynamischen Histogramm-Prozess, DH, zu verarbeiten, und die MFCC-Matrix (2B) unter Verwendung eines Prozesses einer Autoregressionsanalyse, ARA, und eines MARA-Prozesses zu verarbeiten;

ein Ensemble-Lernmodul (25), umfassend eine Anzahl $n_f$ von Ensemble-Lernblöcken (25A), das konfiguriert ist, einen oder mehrere High-Level-Feature-Werte (5) aus den Ausgabedaten der Prozesse des Low-Level-Feature-Vorprozessormoduls (24) unter Verwendung einer Anzahl $n_{GP}$ von parallel ausgeführten Gauß-Prozessen, GPs, zu berechnen; und

optional, eine automatische Annotations-Engine (26), die das Low-Level-Feature-Extraktormodul (23), das Low-Level-Feature-Vorprozessormodul (24) und das Ensemble-Lernmodul (25) umfasst;

wobei das Speichergerät (22) ferner konfiguriert ist, Anweisungen zu speichern, die, wenn sie von dem Prozessor (21) ausgeführt werden, das computerbasierte System (20) dazu veranlassen, ein Verfahren nach einem der Ansprüche 12 bis 14 auszuführen.

16. Verfahren nach Anspruch 10, wobei das Bereitstellen der Anzahl $n_{aa}$ von automatisch annotierten di-

gitalen Audiosignalen (8) Folgendes umfasst: Berechnen (301) des verbundenen Deskriptor-Vektors (6A) unter Verwendung eines Verfahrens nach einem der Ansprüche 12 bis 14.

17. Verfahren nach einem der Ansprüche 1 bis 10, oder 12 bis 14, ferner umfassend:

Speichern des Deskriptor-Vektors (6) in einer Datenbank alleine oder in einer beliebigen oder zeitlich geordneten Kombination mit einem oder mehreren weiteren Deskriptor-Vektoren (6), als eine kompakte semantische Darstellung eines Musiktitels (11A),

wobei jeder der Deskriptor-Vektoren (6) aus verschiedenen Audiosignalen (1) berechnet wird, die aus dem Musiktitel (11A) extrahiert wurden.

**Revendications**

1. Procédé de détermination d'une représentation sémantique compacte d'un signal audio numérique à l'aide d'un système informatique (20), le procédé comprenant :

la fourniture (101) d'un signal audio numérique (1) ;

le calcul (102), à l'aide d'un module (12) processeur de signal numérique, d'une matrice (2) de caractéristiques de bas niveau à partir dudit signal audio numérique (1), ladite matrice (2) de caractéristiques de bas niveau comprenant des valeurs numériques correspondant à une caractéristique audio de bas niveau dans une séquence temporelle ;

le calcul (103), à l'aide d'un module extracteur général (13), d'une matrice (3) de caractéristiques de haut niveau à partir de ladite matrice (2) de caractéristiques de bas niveau, ladite matrice (3) de caractéristiques de haut niveau comprenant des valeurs numériques correspondant à une caractéristique audio de haut niveau ;

le calcul (104), à l'aide d'un module (14) extracteur spécifique aux caractéristiques, d'un nombre $n_f$ de vecteurs (4) de caractéristiques de haut niveau à partir de ladite matrice (3) de caractéristiques de haut niveau, chaque vecteur (4) de caractéristiques de haut niveau comprenant des valeurs numériques correspondant à une caractéristique audio de haut niveau ;

le calcul (105), à l'aide d'un module (15) régresseur spécifique aux caractéristiques, d'un nombre $n_f$ de valeurs (5) de caractéristiques de haut niveau à partir dudit nombre $n_f$ de vecteurs (4) de caractéristiques de haut niveau ; dans lequel chaque valeur (5) de caractéristique de haut niveau représente une caractéristique musicale ou émotionnelle dudit signal audio numérique (1) ; et

le calcul (106) d'un vecteur descripteur (6) en concaténant ledit nombre $n_f$ de valeurs (5) de caractéristiques de haut niveau

**caractérisé en ce que**

ledit module extracteur général (13) utilise un modèle de réseau neuronal convolutif (CNN pour « Convolutional Neural Network ») préentraîné (107) isolément du reste des modules en tant que modèle classificateur de genre musical ;

dans lequel l'architecture dudit modèle CNN (17) comprend :

un bloc d'entrée (171) configuré pour normaliser ladite matrice (2) de caractéristiques de bas niveau à l'aide d'une couche de normalisation par lots ;

suivi de quatre blocs convolutifs (172) consécutifs ; et

une couche de sortie (173).

2. Procédé selon la revendication 1, dans lequel ladite matrice (2) de caractéristiques de bas niveau est une concaténation verticale du spectrogramme Mel dudit signal audio numérique (1) et de ses dérivées première et seconde ultérieures.

3. **Procédé** selon la revendication 1, dans lequel chacun des quatre blocs convolutifs (172) consécutifs comprend

une couche convolutive (1721) bidimensionnelle,

une couche (1722) de normalisation par lots,

une unité linéaire exponentielle (1723),

une couche (1724) de pooling maximale bidimensionnelle, et

une couche de décrochage (1725) ; et

dans lequel la couche convolutive (1721) du premier bloc convolutif comprend 64 filtres, tandis que les couches convolutives (1721) des blocs consécutifs suivants comprennent 128 filtres.

4. Procédé selon la revendication 1, dans lequel ledit modèle CNN (17) est pré-entraîné (107) en

remplaçant ladite couche de sortie (173) par une couche récurrente (174) et une couche de décision (175) dans l'architecture dudit modèle CNN (17) ;

en fournissant un nombre $n_1$ de signaux (9) audio numériques étiquetés, chaque signal (9) audio numérique étiqueté comprenant un genre musical réel associé ;

en entraînant ledit modèle CNN (17) en utilisant lesdits signaux (9) audio numériques étiquetés comme entrée, et en effectuant une itération sur un nombre N d'époques ; et

après l'entraînement, en remplaçant ladite couche récurrente (174) et ladite couche de décision (175) par une couche de sortie (173) dans l'architecture dudit modèle CNN (17) ;

dans lequel ledit nombre $n_1$ est $1 \leq n_1 \leq 100\,000\,000$, plus préférablement $100\,000 \leq n_1 \leq 10\,000\,000$, plus préférablement $300\,000 \leq n_1 \leq 400{,}000$, de préférence entre toutes $n_1 = 340{,}000$ ; et

dans lequel ledit nombre d'époques est $1 \leq N \leq 1\,000$, plus préférablement $1 \leq N \leq 100$, de préférence entre toutes N = 40.

5. Procédé selon la revendication 4, dans lequel ladite couche récurrente (174) comprend deux couches (1741) d'unités récurrentes à portes (GRU pour « Gated Recurrent Unit ») et une couche de décrochage (1742) ; et

   dans lequel ladite couche de décision (175) comprend une couche entièrement connectée (1751).

6. Procédé selon l'une quelconque des revendications 1 à 5, dans lequel ledit module (14) extracteur spécifique aux caractéristiques utilise un ensemble d'un nombre $n_f$ de modèles (18) de réseaux neuronaux récurrents (RNN pour « Recurrent Neural Network ») pré-entraînés,

   dans lequel l'architecture desdits modèles RNN (18) peut différer les unes des autres,
   dans lequel une architecture de modèle RNN (18) préférée comprend deux couches (181) d'unités récurrentes à portes (GRU), et une couche de décrochage (182).

7. Procédé selon la revendication 6, dans lequel chacun desdits modèles RNN (18) dans l'ensemble est pré-entraîné (108) en tant que régresseur pour prédire une valeur cible à partir dudit nombre $n_f$ de valeurs (5) de caractéristiques de haut niveau en

   fournissant une couche entièrement connectée (183) supplémentaire d'une unité dans l'architecture dudit modèle RNN (18),
   en fournissant un nombre de signaux (7) audio numériques annotés, chaque signal (7) audio numérique annoté comprenant un nombre d'annotations, ledit nombre d'annotations comprenant des valeurs réelles (ground truth values) $X_{GT}$ pour des caractéristiques de haut niveau du signal (7) audio numérique annoté respectif ;
   en entraînant chaque modèle RNN (18) pour prédire une valeur cible $X_P$ à partir desdites valeurs (5) de caractéristiques de haut niveau en utilisant lesdits signaux (7) audio numériques annotés comme entrée, et en itérant jusqu'à ce que l'erreur absolue moyenne, MAE, entre ladite valeur cible prédite $X_P$ et la valeur réelle $X_{GT}$ correspondante atteigne un seuil prédéfini $T$ ; et
après l'entraînement, en supprimant ladite couche entièrement connectée (183) de l'architecture dudit modèle RNN (18) ;

dans lequel le nombre total $n_a$ d'annotations est $1 \leq n_a \leq 100\,000$, plus préférablement $50\,000 \leq n_a \leq 100\,000$, plus préférablement $70\,000 \leq n_a \leq 80\,000$.

8. Procédé selon l'une quelconque des revendications 1 à 7, dans lequel ledit module (15) régresseur spécifique aux caractéristiques utilise un ensemble d'un nombre $n_f$ de modèles (19) de régresseur de processus gaussien (GPR pour « Gaussian Process Regressor ») pré-entraînés, dans lequel

   chaque modèle GPR (19) est spécifiquement configuré pour une valeur cible parmi ledit nombre $n_f$ de valeurs (5) de caractéristiques de haut niveau, et dans lequel
   chaque modèle GPR (19) utilise un noyau quadratique rationnel,
   dans lequel la fonction noyau k pour les points $x_i, x_j$ est donnée par :

   $$k\left(x_i, x_j\right) = \sigma \left(1 + \frac{(x_i - x_j)^2}{(2al^2)}\right)^{-\alpha}$$

   où $\{\sigma, \alpha, l\} \in [0{,}0,\ 0{,}2,\ 0{,}4,\ 0{,}6,\ 0{,}8,\ 1{,}0,\ 1{,}2,\ 1{,}4,\ 1{,}6,\ 1{,}8]$.

9. Procédé selon la revendication 8, dans lequel chacun desdits modèles GPR (19) dans l'ensemble est pré-entraîné (109) en tant que régresseur pour prédire une valeur cible à partir dudit nombre $n_f$ de valeurs (5) de caractéristiques de haut niveau en

   fournissant (1091) un nombre de signaux (7) audio numériques annotés, chaque signal (7) audio numérique annoté comprenant un nombre d'annotations, ledit nombre d'annotations comprenant des valeurs réelles pour des caractéristiques de haut niveau du signal (7) audio numérique annoté respectif ;
   en entraînant (1092) chaque modèle GPR (19) pour prédire une valeur cible à partir desdites valeurs (5) de caractéristiques de haut niveau en utilisant lesdits signaux (7) audio numériques annotés comme entrée, et en effectuent une itération jusqu'à ce que l'erreur absolue moyenne, MAE, entre ladite valeur cible prédite et la valeur réelle correspondante atteigne un seuil prédéfini ;

en répétant (1093) les étapes ci-dessus en réalisant une recherche par grille d'hyperparamètres sur les paramètres σ, $\alpha$ et $l$ du noyau en attribuant à chaque paramètre une valeur issue d'une liste prédéfinie [0,0, 0,2, 0,4, 0,6, 0,8, 1,0, 1,2, 1,4, 1,6, 1,8], et en utilisant l'erreur quadratique moyenne, MSE, comme métrique d'évaluation, jusqu'à ce que la combinaison de trois hyperparamètres qui obtiennent la MSE la plus faible soit identifiée ; et

en conservant (1094) le modèle présentant l'erreur la plus faible en comparant lesdites MAE et MSE ;

dans lequel le nombre total $n_a$ d'annotations est $1 \leq n_a \leq 100\,000$, plus préférablement $50\,000 \leq n_a \leq 100\,000$, plus préférablement $70\,000 \leq n_a \leq 80\,000$.

10. Procédé selon l'une quelconque des revendications 1 à 9, comprenant en outre l'apprentissage (110) d'un moteur (16) de profilage de descripteurs, ledit moteur (16) de profilage de descripteurs comprenant ledit module (12) processeur de signal numérique, ledit module extracteur général (13), ledit module (14) extracteur spécifique aux caractéristiques et ledit module (15) régresseur spécifique aux caractéristiques ; par

fourniture (1101) d'un nombre $n_{aa}$ de signaux (8) audio numériques auto-annotés, chaque signal (8) audio numérique auto-annoté comprenant un vecteur descripteur (6A) associé comprenant des valeurs réelles pour différentes caractéristiques musicales ou émotionnelles dudit signal audio numérique (1) ;

entraînement (1102) dudit moteur (16) de profilage de descripteurs en utilisant lesdits signaux (8) audio numériques auto-annotés comme entrée, et effectuant une itération desdits modules jusqu'à ce que l'erreur absolue moyenne, MAE, entre les valeurs calculées de vecteurs descripteurs (6) et les valeurs réelles de vecteurs descripteurs (6A) associés atteigne un seuil prédéfini ; et

calcul (1103), à l'aide du moteur (16T) de profilage de descripteurs entraîné, de vecteurs descripteurs (6) pour des signaux (10) audio numériques non annotés sans vecteurs descripteurs (6A) associés,

dans lequel le nombre total $n_{aa}$ d'annotations est $1 \leq n_{aa} \leq 100\,000\,000$, plus préférablement $100\,000 \leq n_{aa} \leq 1\,000\,000$, plus préférablement $500\,000 \leq n_{aa} \leq 600\,000$.

11. Système informatique (20) de détermination d'une représentation sémantique compacte d'un signal audio numérique (1), le système comprenant

un processeur (21) ;

un dispositif de stockage (22) configuré pour stocker un ou plusieurs signaux audio numériques (1) ;

un module (12) processeur de signal numérique configuré pour calculer une matrice (2) de caractéristiques de bas niveau à partir dudit signal audio numérique (1) ;

un module extracteur général (13) configuré pour calculer une matrice (3) de caractéristiques de haut niveau à partir de la matrice (2) de caractéristiques de bas niveau ;

un module (14) extracteur spécifique aux caractéristiques configuré pour calculer un ou plusieurs vecteurs (4) de caractéristiques de haut niveau à partir de la matrice (3) de caractéristiques de haut niveau ;

dans lequel ledit module extracteur général (13) utilise un modèle de réseau neuronal convolutif (CNN pour « Convolutional Neural Network ») pré-entraîné (107) isolément du reste des modules en tant que modèle classificateur de genre musical ;

dans lequel l'architecture dudit modèle CNN (17) comprend :

un bloc d'entrée (171) configuré pour normaliser ladite matrice (2) de caractéristiques de bas niveau à l'aide d'une couche de normalisation par lots ;

suivi de quatre blocs convolutifs (172) consécutifs ; et

une couche de sortie (173) ;

un module (15) régresseur spécifique aux caractéristiques configuré pour calculer une ou plusieurs valeurs (5) de caractéristiques de haut niveau à partir desdits un ou plusieurs vecteurs (4) de caractéristiques de haut niveau ; et

facultativement, un moteur (16) de profilage de descripteur comprenant ledit module (12) processeur de signal numérique, ledit module extracteur général (13), ledit module extracteur spécifique aux caractéristiques et ledit module régresseur spécifique aux caractéristiques ;

dans lequel le dispositif de stockage (22) est en outre configuré pour stocker des instructions qui, lorsqu'elles sont exécutées par ledit processeur (21), amènent le système informatique (20) à réaliser un procédé selon l'une quelconque des revendications 1 à 10.

12. Procédé de détermination d'une représentation sémantique compacte d'un signal audio numérique (1) à l'aide d'un système informatique (20), le procédé comprenant :

la fourniture (201) d'un signal audio numérique (1) ;

le calcul (202), à l'aide d'un module (23) extracteur de caractéristiques de bas niveau, à partir dudit signal audio numérique (1), d'un spectrogramme Mel (2A) et d'une matrice de coefficients cepstraux de fréquence Mel, MFCC (pour « Mel Frequency Cepstral Coefficients ») (2B) ;

le traitement (203), à l'aide d'un module (24) préprocesseur de caractéristiques de bas niveau, dudit spectrogramme Mel (2A) et de ladite matrice MFCC (2B), ledit spectrogramme Mel (2A) étant soumis séparément à au moins un processus d'analyse d'autorégression multiple, MARA (pour « Multi Auto Regression Analysis »), et à un processus d'histogramme dynamique, DH (pour « Dynamic Histogram »), et ladite matrice MFCC (2B) étant soumise séparément à au moins un processus d'analyse d'autorégression, ARA (pour « Auto Regression Analysis »), et à un processus MARA, la sortie de chaque processus MARA étant une matrice d'autorégression multivariée du premier ordre, la sortie de chaque processus ARA étant une matrice d'autorégression du troisième ordre, et la sortie de chaque processus DH étant une matrice d'histogramme dynamique ; et

le calcul (204), à l'aide d'un module (25) d'apprentissage d'ensemble, d'un nombre $n_f$ de valeurs (5) de caractéristiques de haut niveau en

alimentant (2041) les matrices de sortie provenant dudit module (24) préprocesseur de caractéristiques de bas niveau en tant que groupe parallèlement dans un nombre $n_f$ de blocs (25A) d'apprentissage d'ensemble au sein dudit module (25) d'apprentissage d'ensemble, chaque bloc (25A) d'apprentissage d'ensemble comprenant en outre un nombre $n_{GP}$ de processus gaussiens, GP (pour « Gaussian Processes »), exécutés parallèlement, chacun desdits GP recevant au moins une desdites matrices de sortie et délivrant en sortie une valeur (5A) de caractéristique de haut niveau prédite, et en sélectionnant (2042), en tant que sortie de chaque bloc (25A) d'apprentissage d'ensemble, le meilleur candidat parmi lesdites valeurs (5A) de caractéristiques de haut niveau prédites, à l'aide de données statistiques, comme l'une desdites valeurs (5) de caractéristiques de haut niveau du nombre $n_f$, chaque valeur (5) de caractéristique de haut niveau représentant une caractéristique musicale ou émotionnelle dudit signal audio numérique (1) ; et

calculant (205) un vecteur descripteur (6) en concaténant ledit nombre $n_f$ de valeurs (5) de caractéristiques de haut niveau.

**13.** Procédé selon la revendication 12, dans lequel la sélection (2042) du meilleur candidat parmi lesdites valeurs (5A) de caractéristiques de haut niveau prédites comprend

la détermination (2043), à l'aide d'une base de données prédéfinie de probabilités statistiques concernant la capacité de chaque GP à prédire une certaine valeur (5) de caractéristique de haut niveau, du GP au sein du bloc (25A) d'apprentissage d'ensemble ayant la probabilité la plus faible de prédire la valeur (5) de caractéristique de haut niveau respective, et le rejet de sa sortie (5A) ; et

la sélection (2044) de la valeur (5) de caractéristique de haut niveau prédite avec une valeur numérique intermédiaire parmi les sorties restantes (5A).

**14.** Procédé selon l'une quelconque des revendications 12 ou 13, comprenant en outre l'apprentissage (206) d'un moteur d'auto-annotation (26), ledit moteur d'auto-annotation (26) comprenant ledit module (23) extracteur de caractéristiques de bas niveau, ledit module (24) préprocesseur de caractéristiques de bas niveau et ledit module (25) d'apprentissage d'ensemble ;

la fourniture (2061) d'un nombre de signaux (7) audio numériques annotés, chaque signal (7) audio numérique annoté comprenant un nombre d'annotations, ledit nombre d'annotations comprenant des valeurs réelles pour des caractéristiques de haut niveau du signal (7) audio numérique annoté respectif ;

l'apprentissage (2062) dudit moteur d'auto-annotation (26) en utilisant lesdits signaux (7) audio numériques annotés comme entrée et l'apprentissage desdits processus gaussiens à l'aide d'une régression ordinale ; et

le calcul (2063), à l'aide du moteur d'auto-annotation (26T) entraîné, de vecteurs descripteurs (6) pour des signaux (10) audio numériques non annotés, lesdits vecteurs descripteurs (6) comprenant des caractéristiques de haut niveau prédites,

dans lequel le nombre total $n_a$ d'annotations est $1 \le n_a \le 100\,000$, plus préférablement $50\,000 \le n_a \le 100\,000$, plus préférablement $70\,000 \le n_a \le 80\,000$.

**15.** Système informatique (20) de détermination d'une représentation sémantique compacte d'un signal audio numérique (1), le système comprenant

un processeur (21) ;

un dispositif de stockage (22) configuré pour stocker un ou plusieurs signaux audio numériques (1) ;

un module (23) extracteur de caractéristiques de bas niveau configuré pour calculer, à partir dudit signal audio numérique (1), un spectrogramme Mel (2A) et une matrice de coefficients cepstraux de fréquence Mel, MFCC (pour « Mel Frequency Cepstral Coefficients ») (2B) ;

un module (24) préprocesseur de caractéristiques de bas niveau configuré pour traiter ledit spectrogramme Mel (2A) à l'aide d'un processus d'analyse d'autorégression multiple, MARA (pour « Multi Auto Regression Analysis »), et d'un processus d'histogramme dynamique, DH (pour « Dynamic Histogram »), et pour traiter ladite matrice MFCC (2B) à l'aide d'au moins un processus d'analyse d'autorégression, ARA (pour « Auto Regression Analysis ») et d'un processus MARA ;

un module (25) d'apprentissage d'ensemble comprenant un nombre $n_f$ de blocs (25A) d'apprentissage d'ensemble configurés pour calculer une ou plusieurs valeurs (5) de caractéristiques de haut niveau à partir des données de sortie provenant des processus dudit module (24) préprocesseur de caractéristiques de bas niveau en utilisant un nombre $n_{GP}$ de processus gaussiens, GP (pour « Gaussian Processes »), exécutés parallèlement ; et

facultativement, un moteur d'auto-annotation (26), ledit moteur d'auto-annotation (26) comprenant ledit module (23) extracteur de caractéristiques de bas niveau, ledit module (24) préprocesseur de caractéristiques de bas niveau et ledit module (25) d'apprentissage d'ensemble ;

dans lequel le dispositif de stockage (22) est en outre configuré pour stocker des instructions qui, lorsqu'elles sont exécutées par ledit processeur (21), amènent le système informatique (20) à réaliser un procédé selon l'une quelconque des revendications 12 à 14.

16. Procédé selon la revendication 10, dans lequel la fourniture dudit nombre $n_{aa}$ de signaux (8) audio numériques auto-annotés comprend :
le calcul (301) dudit vecteur descripteur (6A) associé à l'aide d'un procédé selon l'une quelconque des revendications 12 à 14.

17. Procédé selon l'une quelconque des revendications 1 à 10 ou 12 à 14, comprenant en outre :

le stockage dudit vecteur descripteur (6) dans une base de données seul, ou dans une combinaison arbitraire ou ordonnée temporellement avec un ou plusieurs autres vecteurs descripteurs (6), en tant que représentation sémantique compacte d'une piste musicale (11A),

dans lequel chacun desdits vecteurs descripteurs (6) est calculé à partir de différents signaux audio (1) extraits de ladite même piste musicale (11A).

FIG. 1

FIG. 2

EP 3 736 804 B1

FIG. 3

FIG. 4

FIG. 5

FIG. 6

$$k(x_i, x_j) = \sigma \left( 1 + \frac{(x_i - x_j)^2}{(2\alpha l^2)} \right)^{-\alpha}$$

$$\{\sigma, \alpha, l\} \in [0.0, 0.2, 0.4, 0.6, 0.8, 1.0, 1.2, 1.4, 1.6, 1.8]$$

FIG. 7

FIG. 8

FIG. 9

FIG. 10

FIG. 11

FIG. 12

FIG. 13

**FIG. 14**

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANUSHA BALAKRISHNAN et al.** *Reading Emotions from Speech using Deep Neural Networks*

- Speech emotion recognition using deep 1D & 2D CNN LSTM networks. **ZHAO JIANFENG et al.** BIOMEDICAL SIGNAL PROCESSING AND CONTROL. ELSEVIER, 11 September 2018, vol. 47, 312-323